# EUROPEAN PATENT APPLICATION

(11) **EP 4 075 088 A1**
(43) Date of publication of application: **19.10.2022**
(21) Application number: 19955916.2
(22) Date of filing: 09.12.2019
(51) Int. Cl.: F28D 15/02, B64G 1/10, B64G 1/50

(54) **COOLING APPARATUS AND SATELLITE**

(71) Applicant: MITSUBISHI ELECTRIC CORPORATION, Chiyoda-ku Tokyo 100-8310 (JP)
(72) Inventor: MORIYAMA, Takashi, Tokyo 100-8310 (JP); SAKATA, Yuki, Tokyo 100-8310 (JP); CHIBA, Hiroshi, Tokyo 100-8310 (JP); KUSASHIMA, Tatsuya, Tokyo 100-8310 (JP)
(74) Representative: Sajda, Wolf E.
(86) International application number: PCT/JP2019/048132
(87) International publication number: WO 2021/117105

(57) **Abstract**

A cooling device (100) is a device that cools a heat generator such as an electronic device (2) mounted in a mounting device such as an artificial satellite. The cooling device (100) includes a refrigerant flow path (10) configured annularly by sequentially connecting a pump (3) that circulates a liquid refrigerant, a cooler (4) that cools a heat generator such as an electronic device (2) with the refrigerant, and a heat exchanger (5) that cools the refrigerant. In addition, the cooling device (100) has a vapor mixing unit (20) that mixes the vapor generated by heat of at least one of heat intrusion from an outside to a mounting device such as an artificial satellite and heat generation of a heat generator such as the electronic device (2) into the refrigerant flowing into a cooler (4) in the refrigerant flow path (10).

## Description

### Technical Field

The present invention relates to a cooling device that cools a heat generator such as an electronic device, and an artificial satellite having the cooling device.

### Background Art

An artificial satellite that moves in orbit around a planet has embedded heat pipes that conduct heat to a structural body in which electronic devices are stored and a panel that supports the electronic devices in the structural body. The heat generated from the electronic devices in the structural body is conducted through the heat pipes to the heat dissipation surface formed on the plane of the structural body on the north-south side of outer space. The heat conducted to the heat dissipation surface is radiated from the heat dissipation surface toward the deep space. This cools the electronic devices.

Non-Patent Literature 1 describes a cooling device that transports heat from electronic devices to a heat dissipation surface by forcibly transporting the refrigerant using a pump instead of heat pipes.

### Citation List

### Non-Patent Literature

Non-Patent Literature 1: Development of a two-phase mechanically pumped loop (2ΦMPL) for the thermal dissipation management of spacecraft: Simulation and test results, 44th International Conference on Environmental Systems, ICES-2014-164.

### Summary of Invention

### Technical Problem

When heat pipes are used to cool electronic devices in an artificial satellite, the heat pipes are connected at a plurality of points in the heat route from the electronic devices to the heat dissipation surface. Accordingly, the contact thermal resistance between the heat pipes becomes large and the cooling efficiency reduces. In addition, the mass of the artificial satellite increases.

To reduce the number of connections between the heat pipes, the electronic devices need to be disposed near the heat dissipation surface on the north-south side of the structural body. Accordingly, when the number of connections between the heat pipes reduces, the electronic devices with high heat generation cannot be disposed closely in the center portion in the structural body.

By using the cooling device having the pump as described in Non-Patent Literature 1, the refrigerant can be directly supplied to the electronic devices in the center portion of the structural body. However, this cooling device is an active device that requires the power and control of devices such as the pump. Accordingly, it is necessary to ensure that the cooling device can operate stably even when the heat load of the structural body changes due to changes in the radiation angle of the sunlight.

For example, in the structure of the cooling device in the Non-Patent Literature 1, the supercooled refrigerant liquid needs to flow into and out of the pump to prevent a malfunction due to the inflow of vapor into the pump. When the supercooled refrigerant liquid flows into and out of the pump, occurrence of uneven cooling needs to be prevented in the cooler for the electronic devices disposed downstream of the pump.

Accordingly, the generation of a sensible heat exchange region due to a single-phase liquid in the cooler can be prevented by installing a preheater between the pump and the cooler and heating the supercooled refrigerant liquid to the saturation temperature with the preheater. However, when the number of components to be controlled such as the preheater increases, the number of devices and systems for controlling them also increases.

As a result, the probability of a failure increases and the mass loaded on the artificial satellite increases. In addition, the power consumption for operating the preheater increases. In addition, the amount of radiation on the heat dissipation surface corresponding to the amount of heat received from the preheater needs to be increased, thereby increasing in the loaded mass due to the expansion of the heat dissipation surface.

An object of the present invention is to make it possible to cool a heat generator such as an electronic device stably and evenly with a small amount of control and electric power.

### Solution to the Problem

### Advantageous Effects of the Invention

In the present invention, the vapor generated by heat of at least one of the heat intrusion from an outside to the mounting device and the heat generation of the heat generator is mixed into the refrigerant flowing into the cooler in the refrigerant flow path. This can cool the heat generator such as an electronic device stably and evenly with a smaller amount of control and electric power than in the case of addition of a component to be controlled such as a preheater.

### Brief Description of Drawings

- FIG. 1: is a schematic structural diagram of an artificial satellite 200 having a cooling device 100 according to Embodiment 1.
- FIG. 2: is a refrigerant circuit diagram of the cooling device 100 according to Embodiment 1.
- FIG. 3: is a schematic state transition diagram of the cooling device.
- FIG. 4: is a refrigerant circuit diagram of the cooling device 100 according to Modification 1 of Embodiment 1.
- FIG. 5: is a refrigerant circuit diagram of the cooling device 100 according to Embodiment 2.
- FIG. 6: is a diagram illustrating a structure example of an ejector 23 according to Embodiment 2.
- FIG. 7: is a diagram illustrating a structure example of the ejector 23 according to Embodiment 2.
- FIG. 8: is a refrigerant circuit diagram of the cooling device 100 according to Modification 1 of Embodiment 2.
- FIG. 9: is a refrigerant circuit diagram of the cooling device 100 according to Modification 2 of Embodiment 2.
- FIG. 10: is a diagram illustrating a structure example of a gas-liquid separator 25 according to Modification 2 of Embodiment 2.
- FIG. 11: is a diagram illustrating a structure example of the gas-liquid separator 25 according to Modification 2 of Embodiment 2.
- FIG. 12: is a diagram illustrating a structure example of the gas-liquid separator 25 according to Modification 2 of Embodiment 2.
- FIG. 13: is a sectional view of Modification 2 of Embodiment 2 taken along line X-X' in FIG. 12.
- FIG. 14: is a refrigerant circuit diagram of the cooling device 100 according to Modification 3 of Embodiment 2.
- FIG. 15: is a refrigerant circuit diagram of the cooling device 100 according to Embodiment 3.
- FIG. 16: is a diagram illustrating another structure example of a front heat exchanger 26 according to Embodiment 3.
- FIG. 17: is a diagram illustrating another structure example of the front heat exchanger 26 according to Embodiment 3.
- FIG. 18: is a refrigerant circuit diagram of the cooling device 100 according to Modification 1 of Embodiment 3.
- FIG. 19: is a refrigerant circuit diagram of the cooling device 100 according to Embodiment 4.
- FIG. 20: is a refrigerant circuit diagram of the cooling device 100 according to Modification 1 of Embodiment 4.
- FIG. 21: is a refrigerant circuit diagram of the cooling device 100 according to Modification 2 of Embodiment 4.
- FIG. 22: is a refrigerant circuit diagram of the cooling device 100 according to Modification 3 of Embodiment 4.
- FIG. 23: is a refrigerant circuit diagram of the cooling device 100 according to Modification 3 of Embodiment 4.
- FIG. 24: is a refrigerant circuit diagram of the cooling device 100 according to Embodiment 5.
- FIG. 25: is a refrigerant circuit diagram of the cooling device 100 according to Embodiment 5.
- FIG. 26: is a refrigerant circuit diagram of the cooling device 100 according to Modification 1 of Embodiment 5.
- FIG. 27: is a refrigerant circuit diagram of the cooling device 100 according to Modification 1 of Embodiment 5.
- FIG. 28: is a refrigerant circuit diagram of the cooling device 100 according to Embodiment 6.
- FIG. 29: is a refrigerant circuit diagram of the cooling device 100 according to Embodiment 6.

### Description of Embodiments

### Embodiment 1.

In Embodiment 1, a cooling device 100 that cools a heat generator mounted in a mounting device will be described. Here, the cooling device 100 that cools an electronic device 2, which is a heat generator, mounted in an artificial satellite 200, which is a mounting device, will be described. However, the mounting device is not limited to the artificial satellite 200. In addition, the heat generator is not limited to the electronic device 2.

### Description of the structure

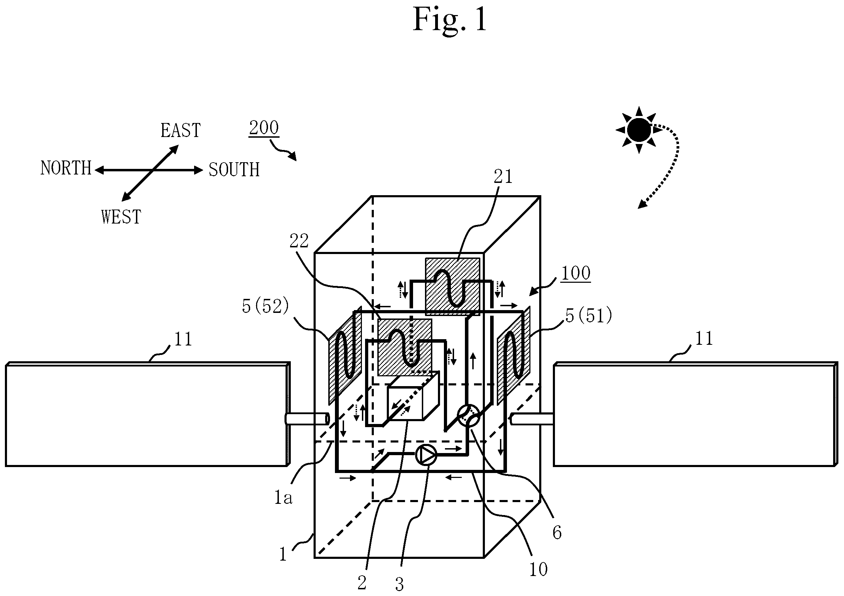

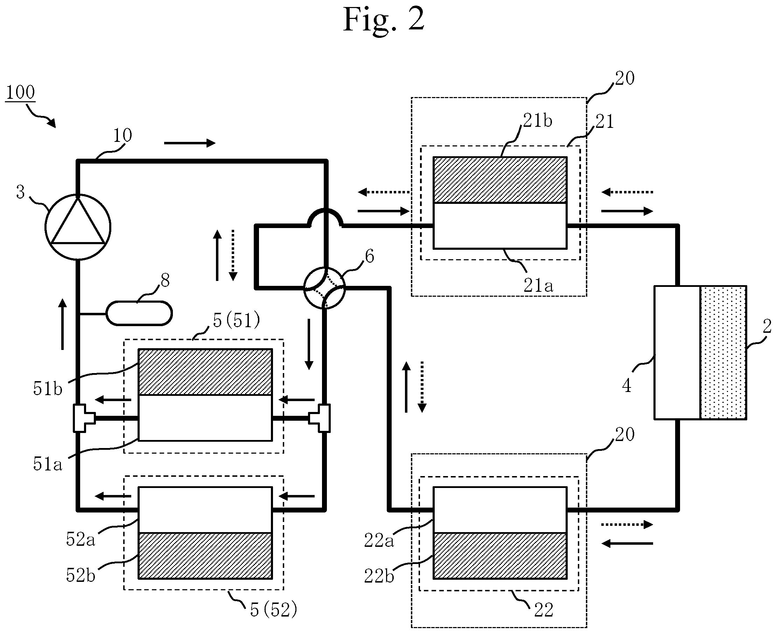

The structure of the cooling device 100 according to Embodiment 1 and the structure of the artificial satellite 200 having the cooling device 100 will be described with reference to FIGS. 1 and 2.

In FIGS. 1 and 2, the solid arrows indicate the mainstream direction of a refrigerant and the dotted arrows indicate the mainstream direction of the refrigerant when the flow direction of part of the refrigerant is switched.

### Basic structure

The artificial satellite 200 has the electronic device 2 and the cooling device 100 in a main body 1 thereof. The electronic device 2 and the cooling device 100 are supported by a frame 1a. The electronic device 2 includes devices that achieve various missions and devices that control these devices. The cooling device 100 is a device that cools the electronic device 2 by transporting the heat generated by the operation of the electronic device 2 to the outside of the main body 1 and dissipating the heat.

The cooling device 100 has a refrigerant flow path 10 through which the refrigerant circulates and the refrigerant flow path 10 is formed annularly by sequentially connecting a pump 3, a cooler 4, and a heat exchanger 5 via piping. The pump 3 circulates the liquid refrigerant by raising the pressure of the liquid refrigerant. The cooler 4 cools the electronic device 2 with the refrigerant. The cooler 4 is provided in the electronic device 2 or provided in contact with the electronic device 2 so that the liquid refrigerant having been discharged from the pump 3 to the refrigerant flow path 10 receives the heat generated in the electronic device 2 and is heated. The heat exchanger 5 cools the refrigerant heated by cooling the electronic device 2.

The cooling device 100 has, as the heat exchanger 5, a south surface heat exchange unit 51 provided on the south surface of the main body 1 and a north surface heat exchange unit 52 provided on the north surface of the main body 1.

The south surface heat exchange unit 51 includes a south surface heat exchanger 51a and a south side heat dissipation surface 51b. The south surface heat exchanger 51a is connected to the refrigerant flow path 10 and receives heat from the refrigerant. The south side heat dissipation surface 51b is provided so that the south surface heat exchanger 51a is formed inside or the south side heat dissipation surface 51b is in contact with the south surface heat exchanger 51a. The south side heat dissipation surface 51b is formed on the south side external wall surface of the main body 1 and radiates and dissipates the heat received from the refrigerant via the south surface heat exchanger 51a toward the deep space outside the artificial satellite 200.

The north surface heat exchange unit 52 includes a north surface heat exchanger 52a and a north side heat dissipation surface 52b. The north surface heat exchanger 52a is connected to the refrigerant flow path 10 and receives heat from the refrigerant. The north side heat dissipation surface 52b is provided so that the north surface heat exchanger 52a is formed inside or the north side heat dissipation surface 52b is in contact with the north surface heat exchanger 52a. The north side heat dissipation surface 52b is formed on the north side external wall surface of the main body 1 and radiates and dissipates the heat received from the refrigerant via the north surface heat exchanger 52a toward the deep space outside the artificial satellite 200.

The south surface heat exchange unit 51 and the north surface heat exchange unit 52 may be connected in parallel to the refrigerant flow path 10 as illustrated in FIGS. 1 and 2 or may be connected in series so that the refrigerant flows sequentially.

### Characteristic structure

The cooling device 100 has a four-way valve 6 in the portion of the refrigerant flow path 10 through which the refrigerant passes after being discharged from the pump 3 before reaching the cooler 4 and the portion of the refrigerant flow path 10 through which the refrigerant passes after flowing out of the cooler 4 before reaching the south surface heat exchanger 51a and the north surface heat exchanger 52a.

The cooling device 100 has a vapor mixing unit 20. The vapor mixing unit 20 mixes the vapor generated by the heat of at least one of the heat intrusion from an outside to the artificial satellite 200, which is the mounting device, and the heat generation of the electronic device 2, which is the heat generator, into the refrigerant flowing into the cooler 4 in the refrigerant flow path 10. In Embodiment 1, the cooling device 100 has an east surface heat exchange unit 21 and a west surface heat exchange unit 22 as the vapor mixing unit 20. Of the routes of the two refrigerant flow paths 10 that connect the four-way valve 6 and the cooler 4 to each other, the east surface heat exchange unit 21 is provided in one route and the west surface heat exchange unit 22 is provided in the other route.

The east surface heat exchange unit 21 includes an east surface heat exchanger 21a and an east side heat exchange surface 21b. The east surface heat exchanger 21a is connected to the refrigerant flow path 10 and exchanges heat with the refrigerant. The east side heat exchange surface 21b is provided so that the east surface heat exchanger 21a is formed inside or the east side heat exchange surface 21b is in contact with the east surface heat exchanger 21a. The east side heat exchange surface 21b is formed on the east side external wall surface of the main body 1. The east side heat exchange surface 21b dissipates heat to the outside of the artificial satellite 200 or receives heat from the outside of the artificial satellite 200 depending on the difference between the amount of radiant heat dissipation toward the deep space on the outer surface and the amount of radiant heat input from stars and planets such as the sunlight. The east side heat exchange surface 21b exchanges heat with the refrigerant via the east surface heat exchanger 21a in accordance with the direction of transfer of the dissipated or received heat.

The west surface heat exchange unit 22 includes a west surface heat exchanger 22a and a west side heat exchange surface 22b. The west surface heat exchanger 22a is connected to the refrigerant flow path 10 and exchanges heat with the refrigerant. The west side heat exchange surface 22b is provided so that the west surface heat exchanger 22a is formed inside or the west side heat exchange surface 22b is in contact with the west surface heat exchanger 22a. The west side heat exchange surface 22b is formed on the west side external wall surface of the main body 1. The west side heat exchange surface 22b dissipates heat to the outside of the artificial satellite 200 or receives heat from the outside of the artificial satellite 200 depending on the difference between the amount of radiant heat dissipation toward the deep space on the outer surface and the amount of radiant heat input from stars and planets such as the sunlight. The west side heat exchange surface 22b exchanges heat with the refrigerant via the west surface heat exchanger 22a in accordance with the direction of transfer of the dissipated or received heat.

In the refrigerant flow path 10, the route through which the refrigerant having been discharged from the pump 3 flows can be selectively switched to route 1 or route 2 described below by switching the mainstream direction of the refrigerant using the four-way valve 6.

The route 1 is the route through which the refrigerant having been discharged from the pump 3 returns to the pump 3 after flowing through the four-way valve 6, the east surface heat exchanger 21a, the cooler 4, the west surface heat exchanger 22a, the four-way valve 6, and then separately through the south surface heat exchanger 51a and the north surface heat exchanger 52a in this order. The route 2 is the route through which the refrigerant having been discharged from the pump 3 returns to the pump 3 after flowing through the four-way valve 6, the west surface heat exchanger 22a, the cooler 4, the east surface heat exchanger 21a, the four-way valve 6, and then separately through the south surface heat exchanger 51a and the north surface heat exchanger 52a.

### Other structures

The electric power that is the power source of the electronic device 2 and the pump 3 is obtained from the radiant light received by a solar panel 11 from a star such as the sun. The solar panel 11 is provided on one or both of the south surface and the north surface of the main body 1. The orientation of the solar panel 11 is controlled in the east-west direction so that the light receiving surface faces the radiant light from the sun.

Alternatively, the electric power that is the power source of the electronic device 2 and the pump 3 may be supplied from the storage battery in the artificial satellite 200 or may be generated from fuel using a power generation device. The device for converting or controlling electric power, the storage battery, and the power generation device are included in the electronic device 2, which is the heat generator.

An accumulator 8 is connected to the portion of the refrigerant flow path 10 branched from the main flow path. The accumulator 8 has any one of structures (1) to (3) described below. (1) Mechanical structure that internally has a volume adjustment mechanism. (2) Thermal structure that has a Peltier element and exchanges heat with a part of the refrigerant flow path 10 via the Peltier element. (3) Thermal structure that has a heating device and performs heat exchange by making the heating device contact with the piping from the pump 3 to the four-way valve 6 along the mainstream direction of the refrigerant flow path 10.

The accumulator 8 controls the refrigerant amounts and pressures inside the refrigerant flow path 10 excluding the accumulator 8 and the components of the cooling device 100 connected to the refrigerant flow path 10 by adjusting the internal refrigerant liquid amount. The mechanical accumulator 8 with structure (1) controls the refrigerant liquid amount by directly changing the internal volume. The thermal accumulators 8 with structures (2) and (3) control the refrigerant liquid amount by evaporating part of the internal refrigerant liquid and adjusting the gas amount.

The accumulator 8 may be connected to any point in the refrigerant flow path 10. For example, the accumulator 8 may be connected to the piping between the pump 3 and the south and north surface heat exchangers 51a and 52a. When the accumulator 8 is connected to this position, the accumulator 8 functions as a buffer tank for the refrigerant liquid when the pump 3 starts and stops. When the refrigerant liquid accumulated in the accumulator 8 flows toward the pump 3, the inflow of the vapor to the pump 3 is suppressed.

### Description of the operation

The artificial satellite 200 with the cooling device 100 orbits the earth and performs various missions in orbit using the electronic device 2. The electric power required to operate the electronic device 2 and the components of the cooling device 100 such as the pump 3 is supplied from the solar panel 11, the storage battery included in the electronic device 2, or the like. The light receiving surface of the solar panel 11 is controlled to face the sun.

When the electronic device 2 operates and generates heat, the pump 3 circulates the refrigerant through the refrigerant flow path 10 and supplies the refrigerant to the cooler 4. When the heat transfers from the electronic device 2 to the refrigerant via the cooler 4, the electronic device 2 is cooled. After receiving the heat from the cooler 4, the refrigerant flows through the refrigerant flow path 10, dissipates the heat toward the deep space via the heat exchangers and the heat dissipation surfaces in the south surface heat exchange unit 51 and the north surface heat exchange unit 52 and in the east surface heat exchange unit 21 or the west surface heat exchange unit 22, and then returns to the pump 3 again.

In the process of circulating the refrigerant through the refrigerant flow path 10 and the components connected to the refrigerant flow path 10, the refrigerant liquid partially evaporates to become refrigerant vapor when receiving heat via the cooler 4. The refrigerant vapor is cooled by the south surface heat exchange unit 51 and the north surface heat exchange unit 52 and by the east surface heat exchange unit 21 or the west surface heat exchange unit 22 and then returns to the refrigerant liquid again. Such latent heat transport makes the cooling capacity and the cooling efficiency high.

When part of the refrigerant vapor remains due to insufficient heat dissipation in the south surface heat exchange unit 51 and the north surface heat exchange unit 52 and the refrigerant vapor flows into the pump 3, a malfunction may occur in the pump 3.

The refrigerant liquid stored in the accumulator 8 is injected into the refrigerant flow path 10 to prevent vapor from flowing into the pump 3. This increases the amount of the refrigerant liquid in the refrigerant flow path 10 and the components connected to the refrigerant flow path 10 excluding the accumulator 8, thereby increasing the saturated vapor pressure. Then, the refrigerant liquid is less likely to evaporate in the cooler 4 and the refrigerant vapor easily condenses in the south surface heat exchange unit 51 and the north surface heat exchange unit 52 and in the east surface heat exchange unit 21 or the west surface heat exchange unit 22.

However, when the refrigerant liquid is excessively injected from the accumulator 8 to the refrigerant flow path 10, the refrigerant liquid is less likely to evaporate in the cooler 4 and the saturation evaporation temperature of the refrigerant rises. Then, the temperature of the entire cooler 4 rises, thereby reducing the cooling capacity and the cooling efficiency. Accordingly, the accumulator 8 is controlled so that the amount of the refrigerant liquid in the accumulator 8 becomes an appropriate amount.

The heat load on the artificial satellite 200 includes not only the heat generation of the electronic device 2, but also the heat generated on the external wall surface of the main body 1 due to the radiant heat from stars and planets, such as the sunlight and the sunlight reflected by the earth. Such heat is conducted directly to the refrigerant flow path 10 through the outer wall and the frame 1a of the main body 1 or conducted to the refrigerant flow path 10 through the elements connected to the electronic device 2 and the refrigerant flow path 10. As a result, the internal refrigerant receives heat.

In particular, the angle of incidence of the sunlight on the east and west side outer walls of the main body 1 is likely to become high due to the rotation and orbit of the earth and the east and west side outer walls may face the sunlight squarely. Accordingly, the amount of radiant heat input from the sunlight may be larger than the amount of radiant heat dissipated to the deep space on the east side heat exchange surface 21b or the west side heat exchange surface 22b, and the refrigerant may receive heat via the east surface heat exchanger 21a or the west surface heat exchanger 22a. One of the east side heat exchange surface 21b and the west side heat exchange surface 22b that is receiving heat from the radiation of the sunlight does not function as a heat dissipation surface. Accordingly, the refrigerant route in the refrigerant flow path 10 is controlled and switched by the four-way valve 6 so that the heat exchanger close to the surface that is receiving heat from the sunlight is upstream of the cooler 4 and the heat exchanger on the opposite side close to the shaded surface capable of dissipating heat is downstream of the cooler 4. Since the refrigerant liquid receives heat in an upstream portion of the cooler 4, the refrigerant liquid easily evaporates in the cooler 4.

### Effect of Embodiment 1

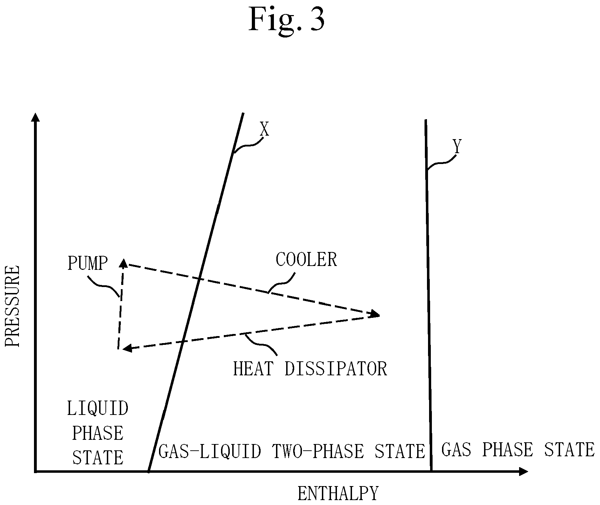

The effect of the cooling device 100 according to Embodiment 1 will be described with reference to FIG. 3.

In the graph in FIG. 3, the vertical axis represents the pressure and the horizontal axis represents the enthalpy. In the graph in FIG. 3, solid line X on a low enthalpy side represents a saturation condensation curve indicating the boundary between the liquid phase state and the two-phase state and the solid line Y on a high enthalpy side represents a saturation evaporation curve indicating the boundary between the two-phase state and the gas phase state. In the graph in FIG. 3, the dashed arrows indicate the state transition of the refrigerant, which indicates a circulation route that passes through the pump, the cooler, and the heat dissipator sequentially and returns to the pump.

The conventional cooling device that uses latent heat circulates the refrigerant with a pump, evaporates part of a refrigerant liquid with a cooler, and condenses the refrigerant vapor with a heat dissipator. The conventional cooling device that uses latent heat circulates the refrigerant liquid by raising the pressure with the pump to increase the amount of circulation of the refrigerant. The inflow of vapor into the pump for the refrigerant liquid may cause a malfunction. Accordingly, the supercooled state needs to be kept so that the enthalpy of the refrigerant before flowing into the pump is lower than the saturation condensation enthalpy.

When the supercooled state before flowing to the pump is kept, the supercooled state is also kept for the refrigerant liquid whose pressure has been raised by the pump. Evaporation does not start unless the amount of heat that corresponds to the difference between the enthalpy after the pressure is raised by the pump and the saturation condensation enthalpy is added. Accordingly, heat exchange in a liquid single phase is performed on the inflow side of the cooler. When the supercooled liquid in a single phase flows into the cooler, bubble nuclei are not generated and grown even when the temperature of the refrigerant liquid near the inner wall surface of the cooler exceeds the saturated vapor temperature and the heat transfer coefficient reduces. As a result, unevenness of cooling between the entry side and the exit side of the cooler occurs and the temperature of the electronic device attached to the entry side of the cooler may rise.

In the cooling device 100 according to Embodiment 1, the sunlight is incident on the east surface heat exchange unit 21 or the west surface heat exchange unit 22 before the refrigerant flows into the cooler 4 and the refrigerant receives heat. This causes a gas-liquid two-phase refrigerant to flow into the cooler 4 or the refrigerant liquid that has a temperature close to saturation temperature and easily evaporates to flow into the cooler 4. Accordingly, the electronic device 2 undergoes latent heat cooling due to the evaporation of the refrigerant throughout the cooler 4 and can be cooled evenly and uniformly.

The refrigerant before flowing into the cooler 4 may be heated by the heating device. In this case, however, the heating device and the device and system for controlling the heating device are required. In addition, it is necessary to increase the power consumption for devices such as the added heating device and dissipate the amount of heat generated by the increase in power consumption from the heat dissipation surface. This increases the amount of loaded mass due to addition of devices such as the heating device and the heat exchanger, increases power consumption, and increases the probability of a malfunction due to an increase in the number of control targets.

In the cooling device 100 according to Embodiment 1, the amount of heat due to the incidence of the sunlight, which is previously generated and needs to be exhausted, is used to heat the refrigerant before flowing to the cooler 4. Accordingly, there is no need to add an extra amount of heat. In addition, the switching of the four-way valve 6 is simple control, so an increase in the probability of a malfunction can be suppressed.

In addition, when heat enters from the sunlight, the heat is conducted to the electronic device 2 via the frame 1a of the main body 1 and the like. In the cooling device 100 according to Embodiment 1, however, the east surface heat exchange unit 21 or the west surface heat exchange unit 22 that is receiving heat from the sunlight is cooled in advance by the refrigerant before the heat is conducted to the electronic device 2. Accordingly, the temperatures of the inside of the main body 1 and the electronic device 2 can be easily controlled.

In the cooling device 100 according to Embodiment 1, even when the refrigerant before flowing into the pump 3 is sufficiently supercooled, evaporation is promoted immediately after the refrigerant flows into the cooler 4, so the electronic device 2 is cooled evenly. Accordingly, the refrigerant before flowing into the pump 3 is easily supercooled, thereby making a malfunction due to the inflow of vapor into the pump 3 less likely to occur.

A system using heat pipes is used as the conventional cooling device for an artificial satellite. Since the refrigerant naturally circulates due to a capillary force or the like in this system, a plurality of heat pipes including almost straight thick pipes that are less bent need to be provided together. Accordingly, the mass loaded on the artificial satellite increases. In addition, the electronic device needs to be installed near the wall surface of the main body on which the heat dissipation surface is present and the electronic device cannot be easily installed in the central portion or the like inside the main body.

The cooling device 100 according to Embodiment 1 forcibly circulates the refrigerant using the pump 3. Accordingly, the refrigerant cooled by the heat exchange units can be directly supplied to the electronic device 2 through the narrow refrigerant flow path 10 having a plurality of bends to cool the electronic device 2.

As described above, the cooling device 100 according to Embodiment 1 can stably cool the electronic device 2 in a long-lived manner while ensuring small loaded mass and high cooling capacity.

### Other structures

### Modification 1 of Embodiment 1

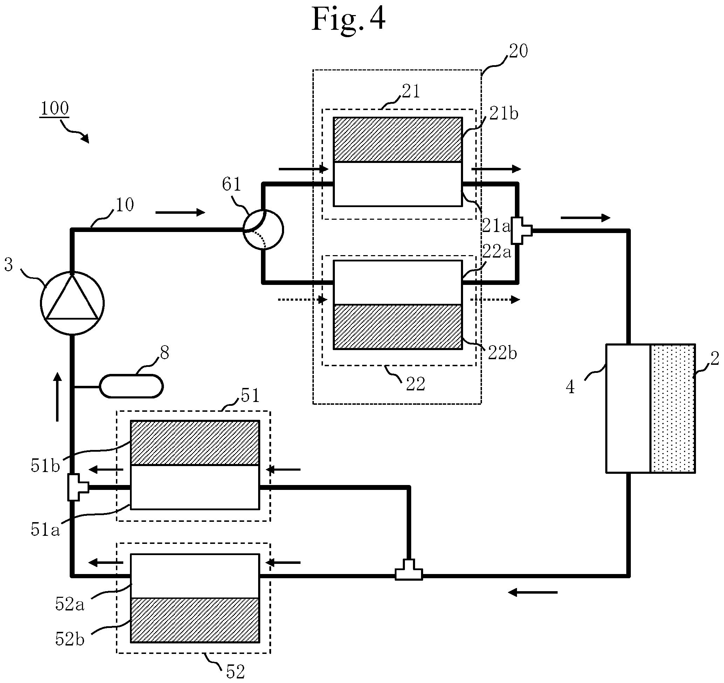

The structure of the cooling device 100 according to Modification 1 of Embodiment 1 will be described with reference to FIG. 4.

In FIG. 4, the solid arrows indicate the mainstream direction of the refrigerant and the dotted arrows indicate the mainstream direction of the refrigerant when the flow direction of part of the refrigerant is switched.

The cooling device 100 uses a three-way valve 61 instead of the four-way valve 6. The three-way valve 61 can selectively switch whether the refrigerant flows to the east surface heat exchanger 21a or the west surface heat exchanger 22a in the portion of the refrigerant flow path 10 through which the refrigerant flows after being discharged from the pump 3 before flowing into the cooler 4.

That is, the portion of the refrigerant flow path 10 on the discharge side of the pump 3 is branched into two flow paths via the three-way valve 61. Then, one of the flow paths is connected to the east surface heat exchanger 21a and the other of the flow paths is connected to the west surface heat exchanger 22a. The two flow paths merge with each other and are connected to the cooler 4. When either the east side heat exchange surface 21b or the west side heat exchange surface 22b receives heat from the sunlight, the three-way valve 61 is controlled and switched so that, of the east surface heat exchanger 21a and the west surface heat exchanger 22a, the refrigerant flows to the one connected to the heat exchange surface that is receiving the heat.

Unlike the cooling device 100 illustrated in FIG. 2, the cooling device 100 according to Modification 1 of Embodiment 1 cannot use the heat exchange surface that is not receiving heat from the sunlight for heat dissipation. However, the refrigerant liquid after being discharged from the pump 3 flows through the heat exchange surface that is receiving heat from the sunlight. This can generate vapor in the refrigerant liquid and cool the electronic device 2 evenly and uniformly with the cooler 4. In addition, the heat exchange surface that is receiving heat from the sunlight can be cooled by the refrigerant.

In the refrigerant flow path 10 illustrated in FIG. 2, the flow direction of the refrigerant in the cooler 4 is reversed by switching the flow path with the four-way valve 6. Accordingly, it is necessary to consider that the flow direction changes the pressure loss depending on the structure of the cooler 4. In addition, it is necessary to consider changes in the heat transfer coefficient due to the difference in the flow mode of the gas-liquid two-phase refrigerant flowing through the cooler 4 depending on the method of connection with the electronic device 2 and the arrangement relationship with the electronic device 2.

In the cooling device 100 according to Modification 1 of Embodiment 1, since the flow direction of the refrigerant in the cooler 4 does not change even when the flow path is switched by the three-way valve 61, the cooler 4 can be configured regardless of the flow direction.

### Other modifications of Embodiment 1

An eclipse may occur in which a planet such as the earth or a satellite such as the moon is directly aligned between a star such as the sun and the artificial satellite 200. In this case, the artificial satellite 200 receives almost no heat due to radiation. Accordingly, all the external wall surfaces of the main body 1 including the east side heat exchange surface 21b and the west side heat exchange surface 22b radiate heat toward the deep space. As a result, the temperature of the refrigerant flowing through the refrigerant flow path 10 of the cooling device 100 can be easily lowered significantly.

In this state, even when the flow path is switched by the four-way valve, evaporation is not easily promoted and uneven cooling is likely to occur in the cooler 4. However, the electronic device 2 can be cooled to an acceptable range by the temperature difference due to the low temperature of the refrigerant.

An orbiting satellite that orbits the earth has been described in Embodiment 1. However, the cooling device 100 can be applied not only to the earth but also to orbiting satellites that orbit other planets or satellites. In addition, the radiant heat by the sunlight has been described as an example of the radiant heat received by the artificial satellite 200. However, when the effect of the radiant heat from another celestial body is strong, control may be performed so that the heat exchange unit on the surface that receives heat due to the incident light from the celestial body is disposed upstream of the cooler 4. In addition to orbiting satellites, a spacecraft such as a space probe may also be controlled so that the heat exchange unit on the surface that receives the radiant heat from the celestial body is disposed upstream of the cooler 4.

A plurality of on-off valves may be used instead of the four-way valve 6 according to Embodiment 1 in FIG. 2 and the three-way valve 61 according to Modification 1 of Embodiment 1 in FIG. 4 as long as the on-off valves can switch the flow path. For example, when there are a plurality of surfaces on which radiant heat from the celestial body changes like heat reception and heat dissipation, it is possible to adopt the structure and the control in which a plurality of four-way valves 6 or the like are used to switch the heat exchange unit on the surface that receives the radiant heat to an upstream portion of the cooler 4.

The electronic device 2 may include one or more heat generating devices. The cooler 4 may also include one or more cooling units connected in parallel or in series so as to correspond to the number of devices constituting the electronic device 2. A plurality of devices that constitute the electronic device 2 may be connected to one cooling unit that constitutes the cooler 4, or one device that constitutes the electronic device 2 may be connected to a plurality of cooling units that constitute the cooler 4.

When the cooler 4 includes a plurality of cooling units connected in parallel, the refrigerant is distributed at the inflow portion of the cooler 4. This reduces the pressure loss of the entire cooler 4, but makes the even distribution of the refrigerant to the plurality of cooling units difficult. Accordingly, the flow path resistance needs to be adjusted in accordance with the heat input ranges of the cooling units.

When the cooler 4 includes a plurality of cooling units connected in series, the pressure loss of the entire cooler 4 is large, but the flow rates of the refrigerants in the cooling units connected in series are the same. Accordingly, the flow path resistance does not need to be adjusted. In the conventional structure, of the plurality of cooling units connected in series, the cooling unit close to the refrigerant inflow portion of the cooler 4 performs the sensible heat cooling of the single-phase refrigerant liquid. Accordingly, part of the electronic device 2 connected to the cooling unit close to the refrigerant inflow portion may not be sufficiently cooled and the temperature thereof may rise. However, in the cooling device 100 according to Embodiment 1, evaporation is promoted even in the cooler close to the refrigerant inflow portion of the cooler 4 and cooling does not become uneven, as described above.

For the south surface heat exchange unit 51, the north surface heat exchange unit 52, the east surface heat exchange unit 21, and the west surface heat exchange unit 22 as well, a plurality of heat exchangers, and a plurality of heat dissipation surfaces or a plurality of heat exchange surfaces may be provided as in the electronic device 2 and the cooler 4.

### Embodiment 2.

Embodiment 2 differs from Embodiment 1 in that the cooling device 100 has an ejector 23 as the vapor mixing unit 20. In Embodiment 2, this difference will be described and the same points will not be described.

### Description of the structure

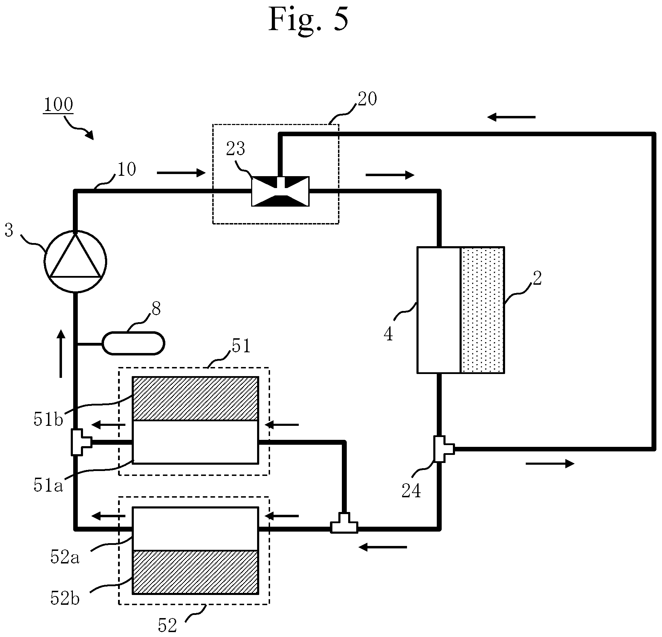

The structure of the cooling device 100 according to Embodiment 2 will be described with reference to FIG. 5.

In FIG. 5, the solid arrows indicate the mainstream direction of the refrigerant.

The cooling device 100 includes the ejector 23 as the vapor mixing unit 20. The ejector 23 is provided in the portion of the refrigerant flow path 10 through which the refrigerant passes after being discharged from the pump 3 before reaching the cooler 4. The ejector 23 merges part of the refrigerant after cooling the electronic device 2, which is the heat generator, using the cooler 4 with the refrigerant flowing into the cooler 4 in the refrigerant flow path 10.

A branch portion 24 is provided in the portion of the refrigerant flow path 10 through which the refrigerant passes after flowing out of the cooler 4 before reaching the south surface heat exchanger 51a and the north surface heat exchanger 52a. Part of the gas-liquid two-phase refrigerant having flowed out of the cooler 4 and flowed into the branch portion 24 flows through the branched refrigerant flow path 10. The refrigerant having flowed through the branched refrigerant flow path 10 merges with the refrigerant liquid having been discharged from the pump 3 via the ejector 23, and flows into the cooler 4 again.

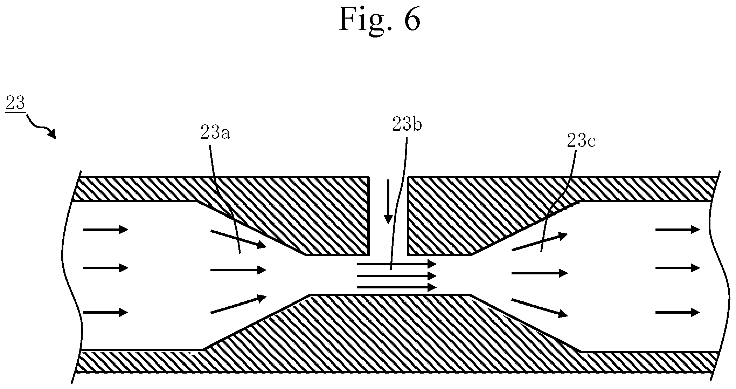

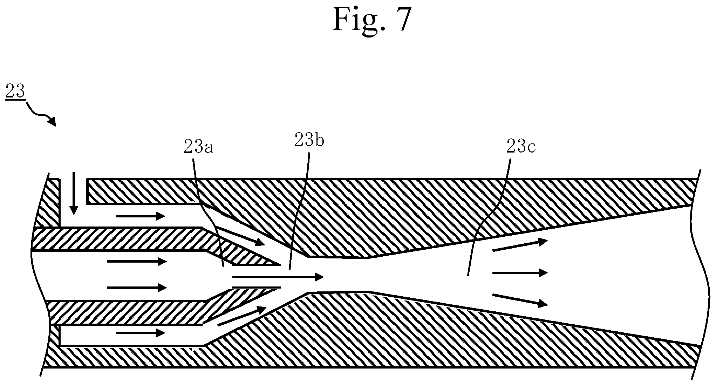

The structure of the ejector 23 according to Embodiment 2 will be described with reference to FIGS. 6 and 7.

As illustrated in FIG. 6, the ejector 23 includes a vena contracta 23a, a confluence portion 23b, and an expanding portion 23c. The vena contracta 23a increases the flow speed of the refrigerant liquid having flowed into the ejector 23 by reducing the cross section of the flow path, increases the dynamic pressure, and reduces the static pressure. The confluence portion 23b merges the part of the gas-liquid two-phase refrigerant having being branched in the branch portion 24 with the refrigerant liquid having become faster in the vena contracta 23a. The expanding portion 23c gradually expands the cross section of the flow path to reduce the flow speed of the refrigerant liquid containing vapor by merging with the gas-liquid two-phase refrigerant in the confluence portion 23b, thereby reducing the dynamic pressure and increasing the static pressure.

The static pressure of the refrigerant having flowed into the ejector 23 reduces in the vena contracta 23a and increases in the expanding portion 23c downstream of the vena contracta 23a. Accordingly, the static pressure in the cooler 4 and the branch portion 24 downstream of the ejector 23 is higher than the static pressure in the confluence portion 23b. By using the pressure difference, part of the gas-liquid two-phase refrigerant having flowed into the branch portion 24 is returned to the confluence portion 23b of the ejector 23.

The example illustrated in FIG. 6 indicates the structure in which part of the gas-liquid two-phase refrigerant branched in the branch portion 24 merges orthogonally to the mainstream direction of the refrigerant liquid having been discharged from the pump 3 and flowed into the ejector 23 in the confluence portion 23b. Part of the gas-liquid two-phase refrigerant having flowed out of the branch portion 24 may diagonally merge with the mainstream direction of the refrigerant liquid having flowed into the ejector 23.

When the gas-liquid two-phase refrigerant diagonally flows into the refrigerant liquid having flowed into the ejector 23 with respect to the mainstream direction thereof, the gas-liquid two-phase refrigerant is easily drawn by receiving a shearing force of the mainstream of the refrigerant liquid. As illustrated in FIG. 7, the flow path of the gas-liquid two-phase refrigerant having flowed out of the branch portion 24 and flowed into the ejector 23 may be configured so as to cover the flow path of the refrigerant liquid having been discharged from the pump 3 and flowed into the ejector 23. As a result, the refrigerant liquid having been discharged from the pump 3 and flowed into the ejector 23 and the gas-liquid two-phase refrigerant branched from the branch portion 24 and flowed into the ejector 23 flow in the same direction and merge with each other in the confluence portion 23b. As a result, it is possible to increase the drawing effect of the shear force obtained by the mainstream of the refrigerant liquid having been discharged from the pump 3 and flowed into the ejector 23.

### Effect of Embodiment 2

In the cooling device 100 according to Embodiment 2, part of the vapor having grown in the cooler 4 due to the heat generation of the electronic device 2, which is the heat generator, merges with the refrigerant flowing into the cooler 4 by the ejector 23. As a result, the refrigerant containing vapor flows into the cooler 4, the electronic device 2 undergoes latent heat cooling, and the electronic device 2 can be cooled evenly and uniformly.

The vapor flowing into the cooler 4 is originally the vapor generated by heat generation of the electronic device 2. Accordingly, there is no need for extra heating unlike the case of using the heating device.

In addition, unlike Embodiment 1, there is no need to use the east surface heat exchange unit 21 and the west surface heat exchange unit 22, and there is no need to use the four-way valve 6 for switching the flow path and control the four-way valve 6. In addition, the cooling device 100 according to Embodiment 2 is applicable to the environment in which the direction of heat transfer changes like heat reception and heat dissipation as in the east surface heat exchange unit 21 and the west surface heat exchange unit 22 according to Embodiment 1 and applicable to the case in which there is no heat intrusion from an outside.

The ejector 23 returns the gas-liquid two-phase refrigerant to the inflow portion of the cooler 4 by using the pressure difference between the confluence portion 23b and the branch portion 24. Accordingly, the function is enabled even in a zero-gravity or micro-gravity environment surrounded by outer space.

### Other structures

### Modification 1 of Embodiment 2

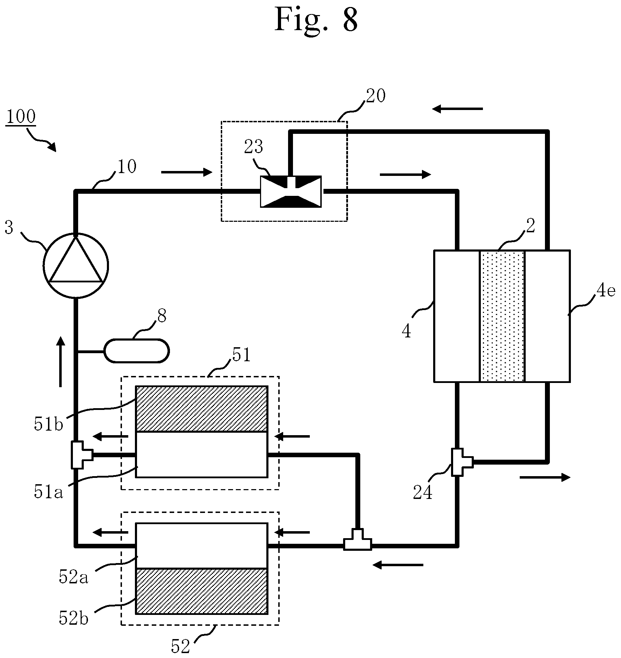

The structure of the cooling device 100 according to Modification 1 of Embodiment 2 will be described with reference to FIG. 8.

The solid arrows in FIG. 8 indicate the mainstream direction of the refrigerant.

The cooling device 100 includes a second cooler 4e that further cools the electronic device 2, which is the heat generator, with part of the refrigerant after cooling the electronic device 2 with the cooler 4. The second cooler 4e is provided in the portion of the refrigerant flow path 10 through which the gas-liquid two-phase refrigerant returned from the branch portion 24 to the ejector 23 flows. The second cooler 4e is provided in the electronic device 2 or provided in contact with the electronic device 2 so that the gas-liquid two-phase refrigerant receives the heat generated in the electronic device 2 and is heated.

The second cooler 4e not only further cools the electronic device 2, but also causes the refrigerant to receive heat from the electronic device 2. This can increase the amount of the gas phase of the gas-liquid two-phase refrigerant returned from the branch portion 24 to the ejector 23.

When the amount of the gas phase of the refrigerant that merges in the ejector 23 increases, it is possible to prevent the vapor from disappearing due to heat exchange with the supercooled liquid that have been discharged from the pump 3 and merged in the ejector 23 in the portion of the refrigerant flow path 10 through which the refrigerant passes before flowing into the cooler 4. This eliminates the need for structural restrictions such as shortening of the portion of the refrigerant flow path 10 between the ejector 23 and the cooler 4, thereby making the structure of the refrigerant flow path 10 more flexible.

### Modification 2 of Embodiment 2

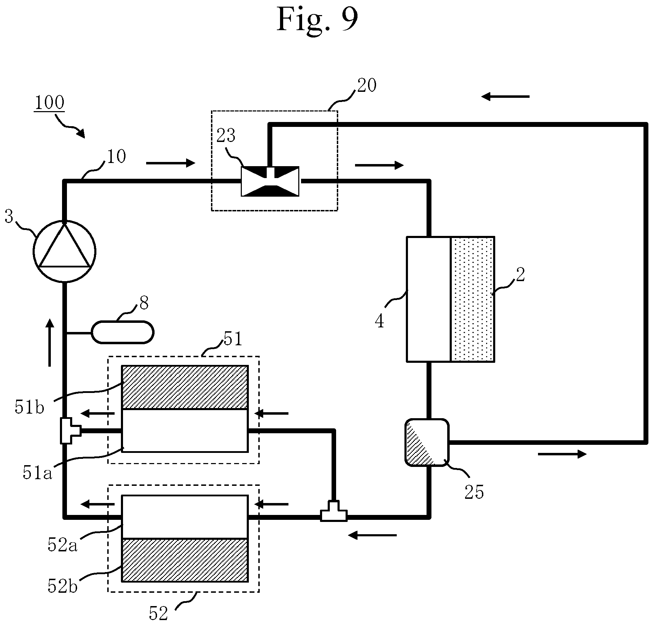

The structure of the cooling device 100 according to Modification 2 of Embodiment 2 will be described with reference to FIG. 9.

The solid arrows in FIG. 9 indicate the mainstream direction of the refrigerant.

The cooling device 100 has a gas-liquid separator 25 instead of the branch portion 24. The gas-liquid separator 25 separates the gas-liquid two-phase refrigerant into a refrigerant with a higher liquid phase ratio and a refrigerant with a higher gas phase ratio. Of the refrigerant with a higher liquid phase ratio and the refrigerant with a higher gas phase ratio, the gas-liquid separator 25 circulates the refrigerant with a higher liquid phase ratio to the south surface heat exchange unit 51 and the north surface heat exchange unit 52 and returns the refrigerant with a higher gas phase ratio to the ejector 23.

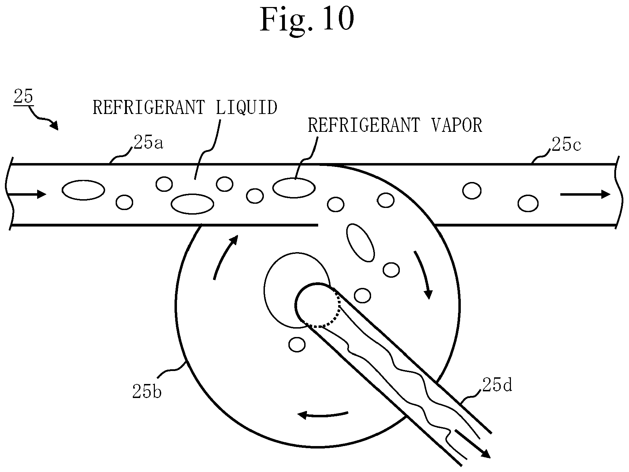

The structure of the gas-liquid separator 25 according to Modification 2 of Embodiment 2 will be described with reference to FIGS. 10 to 13.

The solid arrows in FIGS. 10 to 12 indicate the mainstream direction of the refrigerant.

As illustrated in FIG. 10, the gas-liquid separator 25 includes a gas-liquid two-phase inflow unit 25a, a separating unit 25b, a liquid phase outflow unit 25c, and a gas phase outflow unit 25d. The gas-liquid two-phase inflow portion 25a is a flow path into which the gas-liquid two-phase refrigerant flows. The separating unit 25b separates the gas-liquid two-phase refrigerant having flowed in from the gas-liquid two-phase inflow portion 25a into a refrigerant with a higher liquid phase ratio and a refrigerant with a higher gas phase ratio. The liquid phase outflow portion 25c is a flow path from which the refrigerant with a higher liquid phase ratio flows. The gas phase outflow portion 25d is a flow path from which the refrigerant with a higher gas phase ratio flows.

In the structure illustrated in FIG. 10, the separating unit 25b has a cylindrical structure. The gas-liquid two-phase inflow portion 25a is inserted and attached diagonally in parallel to the cylindrical wall of the separating unit 25b. The liquid phase outflow portion 25c is inserted and attached to the cylindrical wall of the separating unit 25b. The gas phase outflow portion 25d is inserted and attached to the separating unit 25b so that the entrance thereof is disposed in the center of the cylinder of the separating unit 25b.

In the structure illustrated in FIG. 10, the gas-liquid two-phase refrigerant having flowed in from the gas-liquid two-phase inflow portion 25a turns in the separating unit 25b. At this time, a centrifugal force is generated by the turning, the liquid phase with a larger specific gravity gathers in the portion of the separating unit 25b close to the cylindrical wall, and the gas phase with a smaller specific gravity gathers in the portion of the separating unit 25b close to the center of the cylinder. As a result, the refrigerant flowing through the liquid phase outflow portion 25c connected to the cylindrical wall of the separating unit 25b has a higher liquid phase ratio and the refrigerant flowing through the gas phase outflow portion 25d connected to the center of the cylinder of the separating unit 25b has the refrigerant with a higher gas phase ratio.

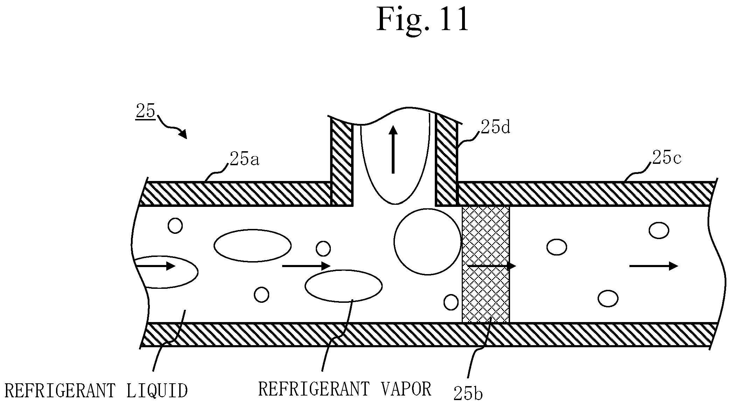

In the structure illustrated in FIG. 11, the separating unit 25b has a filter structure formed by a porous body, a mesh, fiber, or the like that has voids. That is, the separating unit 25b is formed by a member through which a gas phase does not easily pass and a liquid phase easily passes.

In the structure illustrated in FIG. 11, the gas-liquid separator 25 has the separating unit 25b between the gas-liquid two-phase inflow portion 25a and the liquid phase outflow portion 25c. The refrigerant needs to pass through the separating unit 25b to flow from the gas-liquid two-phase inflow portion 25a to the liquid phase outflow portion 25c. In contrast, the refrigerant can flow from the gas-liquid two-phase inflow portion 25a to the gas phase outflow portion 25d without passing through the separating unit 25b.

Of the gas-liquid two-phase refrigerant having flowed in from the gas-liquid two-phase inflow portion 25a, the gas phase portion does not easily pass through the separating unit 25b and the liquid phase portion easily pass through the separating unit 25b. Accordingly, the refrigerant flowing through the liquid phase outflow portion 25c has a higher liquid phase ratio and the refrigerant flowing through the gas phase outflow portion 25d has the refrigerant with a higher gas phase ratio.

The separating unit 25b may be formed by a member through which a gas phase easily passes and a liquid phase does not easily pass. In this case, the separating unit 25b is provided between the gas-liquid two-phase inflow portion 25a and the gas phase outflow portion 25d. Then, the refrigerant needs to pass through the separating unit 25b to flow from the gas-liquid two-phase inflow portion 25a to the gas phase outflow portion 25d, but the refrigerant can flow from the gas-liquid two-phase inflow portion 25a to the liquid phase outflow portion 25c without passing through the separating unit 25b. In this case as well, this structure can function in the same manner as the structure illustrated in FIG. 11.

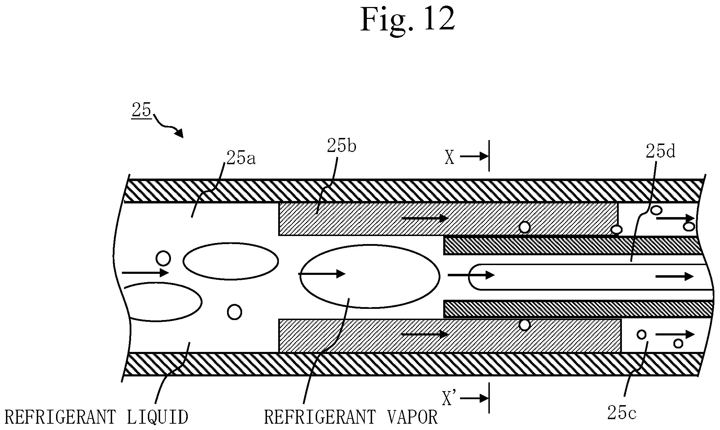

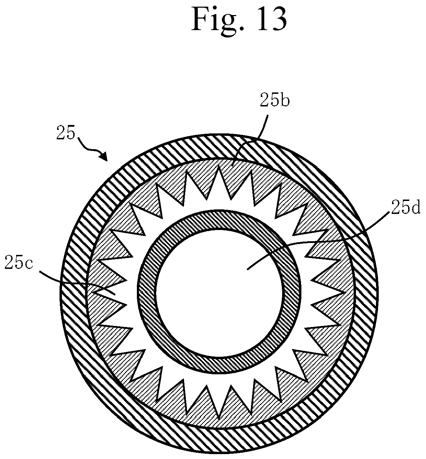

In the structure illustrated in FIGS. 12 and 13, the gas-liquid separator 25 has a double-tube structure. The separating unit 25b is formed by grooves provided in the outer pipe wall. The liquid phase outflow portion 25c is the space in contact with the separating unit 25b that is present between the outer pipe and the inner pipe. The gas phase outflow portion 25d is the space inside the inner pipe that is present inside the separating unit 25b.

The grooves constituting the separating unit 25b are formed in bumps and dips in the cross section of the pipe along the external wall surface. When the gas-liquid two-phase refrigerant flows into the separating unit 25b, the liquid phase refrigerant gathers in dips of the grooves due to the surface tension. Accordingly, mainly the gas phase refrigerant flows in the center of the outer pipe of the gas-liquid separator 25 and mainly the liquid phase refrigerant flows in the portion close to the outer pipe wall. As a result, the refrigerant flowing through the liquid phase outflow portion 25c that is present in the space between the outer pipe and the inner pipe has a higher liquid phase ratio and the refrigerant flowing through the gas phase outflow portion 25d inside the inner pipe has a higher gas phase ratio.

As illustrated in FIG. 9, it is assumed that the gas-liquid separator 25 having the structure described with reference to FIGS. 10 to 13 is used instead of the branch portion 24. In this case, the liquid phase outflow portion 25c is connected to the portion of the refrigerant flow path 10 through which the refrigerant flows to the south surface heat exchange unit 51 and the north surface heat exchange unit 52 and the gas phase outflow portion 25d is connected to the portion of the refrigerant flow path 10 through which the refrigerant flows to the ejector 23.

The gas-liquid two-phase refrigerant having flowed out of the cooler 4 is separated by the gas-liquid separator 25 and the refrigerant with a higher gas phase ratio is returned to the portion before inflowing into the cooler 4 by the ejector 23. This can suppress the disappearance of vapor even when at least one of the portion of the refrigerant flow path 10 from the gas-liquid separator 25 to the ejector 23 and the portion of the refrigerant flow path 10 from the ejector 23 to the cooler 4 becomes long. Then, the latent heat cooling due to evaporation in the cooler 4 can be further promoted.

In addition, the gas-liquid separator 25 as illustrated in FIGS. 10 to 13 can separate gas from liquid without using gravity. Accordingly, the gas-liquid separator 25 is applicable even in a zero-gravity or micro-gravity environment surrounded by outer space.

### Modification 3 of Embodiment 2

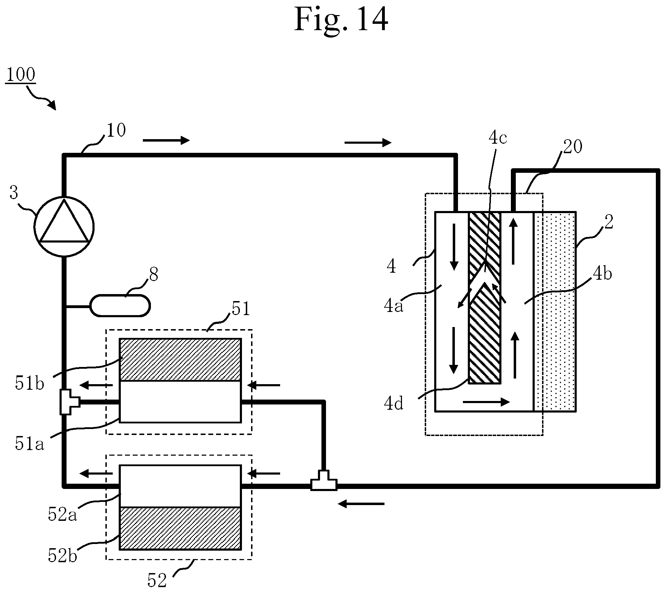

The structure of the cooling device 100 according to Modification 3 of Embodiment 2 will be described with reference to FIG. 14.

The solid arrows in FIG. 14 indicate the mainstream direction of the refrigerant.

The cooling device 100 has a structure in which the cooler 4 includes the functions of the ejector 23 and the branch portion 24. The cooler 4 includes an upstream space 4a, a downstream space 4b, and a bypass flow path 4c. The upstream space 4a is the space into which the refrigerant flows from the refrigerant flow path 10. The downstream space 4b is the space into which the refrigerant having flowed through the upstream space 4a flows so that the refrigerant cools the electronic device 2, which is the heat generator. The bypass flow path 4c is the flow path through which part of the refrigerant having cooled the electronic device 2, which is the heat generator, in the downstream space 4b is returned to the upstream space 4a. The bypass flow path 4c is provided in a partition wall 4d that separates the upstream space 4a from the downstream space 4b. Of the refrigerant having flowed through the downstream space 4b, the portion of the refrigerant not having flowed into the bypass flow path 4c flows out of the cooler 4.

The portion of the bypass flow path 4c that merges with the upstream space 4a is diagonally connected to the upstream space 4a so as to be almost parallel to the mainstream of the refrigerant flowing through the upstream space 4a. In addition, the portion of the bypass flow path 4c that is branched from the downstream space 4b is diagonally connected to the downstream space 4b so as to be almost parallel to the mainstream of the refrigerant flowing through the downstream space 4b.

The gas-liquid two-phase flow having grown by receiving heat from the electronic device 2 in the downstream space 4b returns to the upstream space 4a via the bypass flow path 4c and flows to the downstream space 4b again. As a result, the gas-liquid two-phase flow is always present in the downstream space 4b. Accordingly, the electronic device 2 in contact with the downstream space 4b can be cooled evenly.

In the cooling device 100 according to Modification 3 of Embodiment 2, the gas-liquid two-phase refrigerant is circulated in the cooler 4. Accordingly, even when the ejector 23, the branch portion 24, and the refrigerant flow path 10 connecting the ejector 23 and the branch portion 24 are not present outside the cooler 4, the same effect as when they are present can be obtained. Furthermore, since heat is conducted from the downstream space 4b to the upstream space 4a via the partition wall 4d, the degree of supercooling in the upstream space 4a reduces and the amount of vapor flowing into the downstream space 4b can be easily maintained. Accordingly, the electronic device 2 can be cooled more stably and evenly.

### Embodiment 3.

Embodiment 3 differs from Embodiments 1 and 2 in that the cooling device 100 has a front heat exchanger 26 and a heat pipe 27 as the vapor mixing unit 20. In Embodiment 3, this difference will be described and the same points will not be described.

### Description of the structure

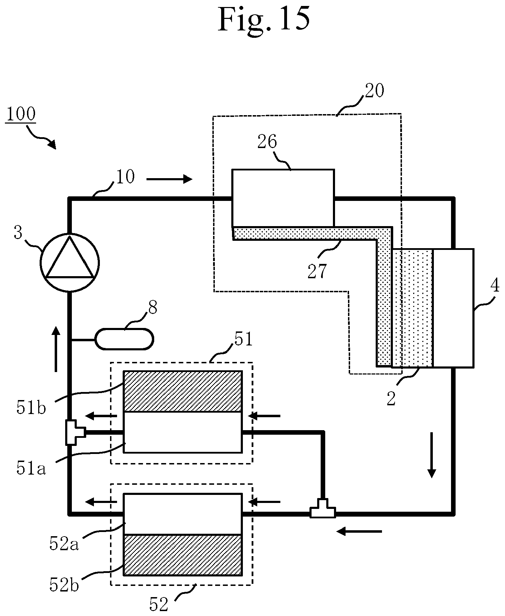

The structure of the cooling device 100 according to Embodiment 3 will be described with reference to FIG. 15.

In FIG. 15, the solid arrows indicate the mainstream direction of the refrigerant.

The cooling device 100 has the front heat exchanger 26 and the heat pipe 27 as the vapor mixing unit 20. The front heat exchanger 26 is the heat exchanger for heating the refrigerant flowing into the cooler 4 in the refrigerant flow path 10. The front heat exchanger 26 is provided in the portion of the refrigerant flow path 10 through which the refrigerant passes after being discharged from the pump 3 before reaching the cooler 4. The heat pipe 27 is the device that transports the heat due to the heat generation by the electronic device 2, which is the heat generator, to the front heat exchanger 26. The heat pipe 27 is connected to part of the electronic device 2 and the front heat exchanger 26 and transports the heat received from the electronic device 2 to the front heat exchanger 26. The heat pipe 27 efficiently transports heat by naturally circulating the gas-liquid two-phase flow body that repeats evaporation and condensation using a capillary force due to a porous body provided inside.

The heat transported from the heat pipe 27 generates vapor from the refrigerant liquid in the front heat exchanger 26. For this purpose, the temperature of the refrigerant in the heat pipe 27 and the saturated vapor temperature of the refrigerant in the heat pipe 27 are adjusted so as to become higher than the saturated vapor temperature of the refrigerant in the portion of the refrigerant flow path 10 through which the refrigerant passes after being discharged from the pump 3 before reaching the cooler 4. That is, in Embodiment 3, the portion of the electronic device 2 that is connected to the heat pipe 27 is set to have a temperature during operation of the cooling device 100 and a permissible temperature that are higher than in the portion of the electronic device 2 that is connected to the cooler 4.

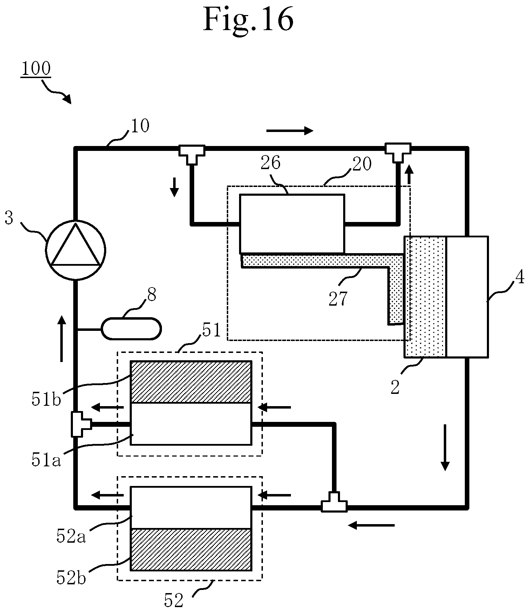

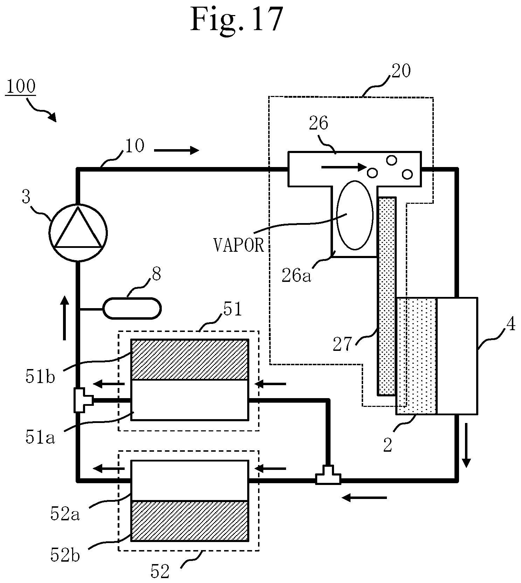

A structure example of the front heat exchanger 26 according to Embodiment 3, which is different from that in FIG. 15, will be described with reference to FIGS. 16 and 17.

As illustrated in FIG. 16, the front heat exchanger 26 may be connected to a flow path branched from the mainstream of the portion of the refrigerant flow path 10 through which the refrigerant passes after being discharged from the pump 3 before reaching the cooler 4. When the mainstream of the refrigerant liquid in the refrigerant flow path 10 is directly heated by the front heat exchanger 26 as illustrated in FIG. 15, a large amount of supercooled liquid is always supplied to the refrigerant boundary layer near the inner wall surface of the front heat exchanger 26. This makes vapor less likely to be generated, so the amount of heat supplied from the heat pipe 27 needs to be increased. In contrast, when the front heat exchanger 26 is connected to a flow path branched from the mainstream as illustrated in FIG. 16, the amount of the refrigerant supplied to the front heat exchanger 26 reduces. Accordingly, vapor is easily generated in the front heat exchanger 26.

As illustrated in FIG. 17, a dead water region 26a in which the flow of the refrigerant liquid stagnates may be provided in a portion of the front heat exchanger 26 deviating from the mainstream of the refrigerant. Then, the heat pipe 27 may be connected to the outer wall of the front heat exchanger 26 around the dead water region 26a to supply heat to the dead water region 26a from the heat pipe 27.

The refrigerant liquid is almost stationary in the dead water region 26a. Accordingly, even when the amount of supplied heat is small, the temperature rises and vapor is generated. The generated vapor overflows from the dead water region 26a, flows out of the front heat exchanger 26, flows through the refrigerant flow path 10, and flows into the cooler 4. Then, evaporation is promoted in the cooler 4.

As described above, even when the refrigerant liquid flowing into the cooler 4 is supercooled, the front heat exchanger 26 illustrated in FIGS. 16 and 17 can add vapor to the refrigerant liquid.

### Effect of Embodiment 3

In the cooling device 100 according to Embodiment 3, the heat pipe 27 is used to transport the heat generated in part of the electronic device 2 to the front heat exchanger 26, which is disposed upstream of the cooler 4. This can generate vapor in the front heat exchanger 26 and supply the gas-liquid two-phase flow to the cooler 4. As a result, the electronic device 2 undergoes latent heat cooling and the electronic device 2 can be cooled uniformly and evenly.

The temperature of the part of the electronic device 2 connected to the heat pipe 27 is higher than those of the other portions of the electronic device 2 cooled by the cooler 4. For example, due to structural or manufacturing restrictions of the artificial satellite 200, the cooler 4 and the refrigerant flow path 10 cannot be disposed in or near the portion in which the permissible temperature of the electronic device 2 is high, in some cases. In such a case, by installing the heat pipe 27 that has a flow path independent of the refrigerant flow path 10, part of the electronic device 2 can be cooled by the heat pipe 27.

Even when some portions of the electronic device 2 have different optimum temperatures, the portions may be cooled evenly while their temperatures are adjusted by connecting the heat pipe 27 to the high temperature side and connecting the cooler 4 to the low temperature side.

### Other structures

### Modification 1 of Embodiment 3

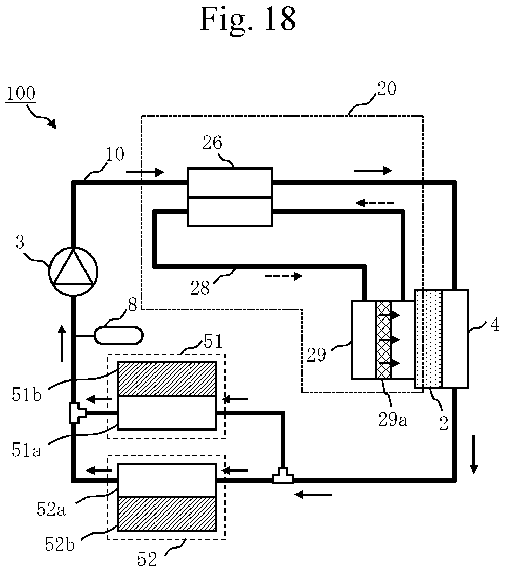

The structure of the cooling device 100 according to Modification 1 of Embodiment 3 will be described with reference to FIG. 18.

The solid arrows in FIG. 18 indicate the mainstream direction of the refrigerant flowing through the refrigerant flow path 10 and the dashed arrows indicate the mainstream direction of a second refrigerant flowing through a secondary flow path 28.

The cooling device 100 has the secondary flow path 28, which forms a closed loop independent of the refrigerant flow path 10, instead of the heat pipe 27. The secondary flow path 28 is formed annularly by sequentially connecting the front heat exchanger 26 and an evaporator 29 by piping, and the secondary refrigerant circulates therethrough. The refrigerant circulating through the refrigerant flow path 10 and the refrigerant circulating through the secondary flow path 28 may be of the same type or of different types. The evaporator 29 has therein a wick 29a, formed by grooves, mesh, fiber, or a porous body, that includes a plurality of narrow voids. The secondary flow path 28 is a loop-type heat pipe.

The front heat exchanger 26 is connected to both the refrigerant flow path 10 and the secondary flow path 28. However, in the front heat exchanger 26, a solid wall separates these flow paths from each other so that the refrigerant flowing through the refrigerant flow path 10 does not mix with the secondary refrigerant flowing through the secondary flow path 28, and heat exchange is performed via the solid wall.

As illustrated in FIGS. 16 and 17, heat exchange is performed between the portion in which a refrigerant flow is slow or the refrigerant is stationary in the portion of the front heat exchanger 26 close to the refrigerant flow path 10 and the portion of the front heat exchanger 26 close to the secondary flow path 28 to facilitate the generation of vapor.

The evaporator 29 is connected to part of the electronic device 2. When the evaporator 29 receives heat from the part of the electronic device 2, part of the refrigerant liquid having flowed into the evaporator 29 evaporates. Then, the capillary force at the gas-liquid interface formed in the wick 29a pushes the refrigerant vapor from the evaporator 29, thereby circulating the secondary refrigerant through the secondary flow path 28. The refrigerant vapor having flowed out of the evaporator 29 returns to the refrigerant liquid again by passing heat to the refrigerant flowing through the refrigerant flow path 10 in the front heat exchanger 26, and the refrigerant liquid flows through the secondary flow path 28 and then flows into the evaporator 29.

The temperature of the secondary refrigerant in the secondary flow path 28 and the saturated vapor temperature of the secondary refrigerant in the secondary flow path 28 are adjusted so as to become higher than the saturated vapor temperature of the refrigerant in the portion of the refrigerant flow path 10 through which the refrigerant passes after being discharged from the pump 3 before reaching the cooler 4.

The cooling device 100 according to Modification 1 of Embodiment 3 generates vapor by transporting heat from the part of the electronic device 2 to the front heat exchanger 26, which is disposed upstream of the cooler 4, as in the cooling device 100 according to Embodiment 3. This can supply the gas-liquid two-phase flow to the cooler 4. As a result, the electronic device 2 undergoes latent heat cooling and the electronic device 2 can be cooled uniformly and evenly.

In addition, the secondary flow path 28 can transport heat even when the secondary flow path 28 has a certain length. Accordingly, as compared with the case in which the heat pipe 27 is used, application is enabled even when the front heat exchanger 26 is disposed farther from the electronic device 2.

### Other modifications of Embodiment 3

A solid with a high heat transfer coefficient such as copper, aluminum, or graphite may be used instead of the heat pipe 27 to transport heat to the front heat exchanger 26, which is disposed upstream of the cooler 4, from part of the electronic device 2 by heat conduction.

In this structure, the heat transport capacity is lower than in the heat pipe 27. However, the structure is simpler than the case of using the heat pipe 27 and even complicated heat transport routes can be supported. Accordingly, depending on the arrangement of the electronic device 2 and the cooler 4, the structure is more suitable than the case of using the heat pipe 27.

### Embodiment 4.

c4 differs from Embodiment 1 in that, when the east surface heat exchange unit 21 or the west surface heat exchange unit 22 receives heat from the sunlight, vapor is mixed into the refrigerant by the received heat without control by the four-way valve 6. In Embodiment 4, this difference will be described and the same points will not be described.

### Description of the structure

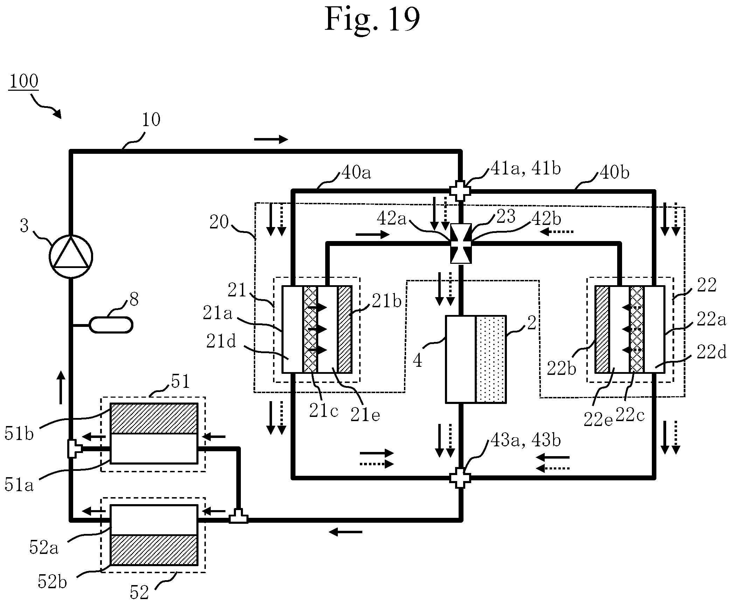

The structure of the cooling device 100 according to Embodiment 4 will be described with reference to FIG. 19.

In FIG. 19, the solid arrows indicate the mainstream direction of the refrigerant and the dotted arrows indicate the mainstream direction of the refrigerant when the flow direction of part of the refrigerant is switched.

The cooling device 100 has the east surface heat exchange unit 21, the west surface heat exchange unit 22, and the ejector 23 as the vapor mixing unit 20. The ejector 23 is provided in the portion of the refrigerant flow path 10 through which the refrigerant passes after being discharged from the pump 3 before reaching the cooler 4.

The cooling device 100 is provided with a first branch flow path 40a that is branched from a first point 41a between the pump 3 and the cooler 4 in the refrigerant flow path 10 and merges with a second point 42a between the pump 3 and the cooler 4 in the refrigerant flow path 10 and a fifth point 43a between the cooler 4 and the south and north surface heat exchange units 51 and 52 in the refrigerant flow path 10. Here, the second point 42a is connected to the ejector 23.

The east surface heat exchange unit 21 is connected to the first branch flow path 40a. The east surface heat exchanger 21a is provided with a first wick 21c. The first wick 21c is formed by grooves, mesh, fiber, or a porous body and includes a plurality of narrow voids. The inside of the east surface heat exchanger 21a is divided into two spaces by the first wick 21c. The flow path connected to the first point 41a and the flow path connected to the fifth point 43a are connected to an identical space 21d, and the flow path connected to the second point 42a is connected to another space 21e. The east side heat exchange surface 21b is provided in the portion close to the space 21e.

Accordingly, part of the refrigerant having flowed into the first branch flow path 40a flows toward the second point 42a due to a capillary force generated at the gas-liquid interface formed when the refrigerant evaporates due to heating by the heat generated by the heat intrusion to the east side heat exchange surface 21b. The rest of the refrigerant having flowed into the first branch flow path 40a flows toward the fifth point 43a and merges with the refrigerant having flowed out of the cooler 4.

The cooling device 100 is provided with a second branch flow path 40b that is branched from a third point 41b between the pump 3 and the cooler 4 in the refrigerant flow path 10 and merges with a fourth point 42b between the pump 3 and the cooler 4 in the refrigerant flow path 10 and a sixth point 43b between the cooler 4 and the south and north surface heat exchange units 51 and 52 in the refrigerant flow path 10. Here, the fourth point 42b is connected to the ejector 23.

The west surface heat exchange unit 22 is connected to the second branch flow path 40b. The west surface heat exchanger 22a is provided with a second wick 22c. The second wick 22c is formed by grooves, mesh, fiber, or a porous body and includes a plurality of narrow voids. The inside of the west surface heat exchanger 22a is divided into two spaces by the second wick 22c. The flow path connected to the third point 41b and the flow path connected to the sixth point 43b are connected to an identical space 22d, and the flow path connected to the fourth point 42b is connected to another space 22e. The west side heat exchange surface 22b is provided in the portion close to the space 22e.

Accordingly, part of the refrigerant having flowed into the second branch flow path 40b flows toward the fourth point 42b due to a capillary force generated at the gas-liquid interface formed when the refrigerant evaporates due to heating by the heat generated by the heat intrusion to the west side heat exchange surface 22b. The rest of the refrigerant having flowed into the second branch flow path 40b flows toward the sixth point 43b and merges with the refrigerant having flowed out of the cooler 4.

In the refrigerant having flowed into the ejector 23 from the refrigerant flow path 10, the static pressure is converted to the dynamic pressure by the vena contracta 23a described with reference to FIG. 6 or 7. Using a pressure drop caused by the conversion from the static pressure to the dynamic pressure, the refrigerant having flowed out of at least one of the east surface heat exchanger 21a and the west surface heat exchanger 22a merges with the refrigerant having flowed into the ejector 23 from the refrigerant flow path 10 in the confluence portion 23b. The merged refrigerants recover the pressure because the flow path is gradually expanded in the expanding portion 23c and flow into the cooler 4.

The refrigerant having flowed out of the cooler 4 merges with the refrigerant having flowed out of the east surface heat exchanger 21a at the fifth point 43a and merges with the refrigerant having flowed out of the west surface heat exchanger 22a at the sixth point 43b. The merged refrigerants flow into the south surface heat exchanger 51a and the north surface heat exchanger 52a.

### Description of operation

When the sunlight is incident on the east side heat exchange surface 21b and the east surface heat exchange unit 21 is receiving heat, part of the refrigerant liquid evaporates in the east surface heat exchanger 21a. Then, a gas-liquid two-phase interface is generated in the plurality of narrow voids in the first wick 21c connecting the space 21d and the space 21e of the east surface heat exchanger 21a separated by the first wick 21c so that the space 21d is filled with mainly refrigerant liquid and the space 21e is filled with mainly refrigerant vapor. Due to the capillary force generated at the gas-liquid two-phase interface, part of the refrigerant liquid in the space 21d evaporates and flows into the space 21e via the first wick 21c. Due to the capillary force generated in the first wick 21c, the pressure of the refrigerant vapor in the space 21e becomes higher than that of the refrigerant liquid in the space 21d. In addition, the drawing force by the ejector 23 is applied to the refrigerant vapor in the space 21e. This causes the refrigerant vapor in the space 21e to flow out of the east surface heat exchanger 21a and flow into the confluence portion 23b of the ejector 23. Then, the refrigerant having flowed in from the refrigerant flow path 10 merges with the refrigerant vapor in the space 21e in the confluence portion 23b. As a result, the vapor is mixed into the refrigerant flowing out of the ejector 23. This causes the refrigerant mixed with the vapor to flow into the cooler 4, the electronic device 2 to undergo latent heat cooling, and the electronic device 2 to be cooled uniformly and evenly.

In contrast, the refrigerant liquid not having evaporated in the space 21d of the east surface heat exchanger 21a flows from the space 21d toward the fifth point 43a. Then, the refrigerant liquid merges with the gas-liquid two-phase refrigerant having flowed out of the cooler 4. The merged refrigerants cool part of the vapor to condense it and then flow into the south surface heat exchanger 51a and the north surface heat exchanger 52a.

When the sunlight is not incident on the east side heat exchange surface 21b and the east surface heat exchange unit 21 is dissipating heat, the refrigerant liquid does not evaporate in the east surface heat exchanger 21a. Accordingly, a rise in pressure by the capillary force in the first wick 21c does not occur. Accordingly, the amount of the refrigerant liquid flowing from the east surface heat exchanger 21a to the ejector 23 depends on the drawing capability of the ejector 23. When the flow path from the east surface heat exchanger 21a to the ejector 23 is long enough, the refrigerant does not flow much to the ejector 23 only by the drawing capability of the ejector 23. Accordingly, the amount of the refrigerant liquid flowing from the east surface heat exchanger 21a to the ejector 23 reduces.

The refrigerant vapor from the west surface heat exchanger 22a may merge in the ejector 23. In this case, the recondensing of vapor before flowing from the ejector 23 into the cooler 4 can be suppressed by reducing the amount of the refrigerant liquid that flows from the east surface heat exchanger 21a and merges in the ejector 23. Accordingly, the capillary force in the first wick 21c and the drawing force by the ejector 23 are adjusted so that the refrigerant vapor that flows from the east surface heat exchanger 21a and merges in the ejector 23 is sufficiently large when the sunlight is incident on the east side heat exchange surface 21b and the east surface heat exchange unit 21 is receiving heat. In contrast, the capillary force in the first wick 21c and the drawing force by the ejector 23 are adjusted so that the refrigerant liquid that flows from the east surface heat exchanger 21a and merges in the ejector 23 reduces when the sunlight is not incident on the east side heat exchange surface 21b and the east surface heat exchange unit 21 is dissipating heat.

When the first branch flow path 40a to the east surface heat exchanger 21a after the refrigerant liquid is discharged from the pump 3 and is branched into three and the flow path from the east surface heat exchanger 21a to the ejector 23 are short, the vapor generated by the east surface heat exchanger 21a can merge in an upstream portion of the cooler 4 only by the capillary force in the first wick 21c without the need for the drawing force by the ejector 23. In this case, only the confluence portion may be used instead of the ejector 23.

The case in which the sunlight is incident on the west side heat exchange surface 22b and the west surface heat exchange unit 22 is receiving heat and the case in which the sunlight is not incident on the west side heat exchange surface 22b and the west surface heat exchange unit 22 is dissipating heat are the same as the corresponding cases for the east surface heat exchange unit 21.

After flowing out of the pump 3, the refrigerant liquid is branched into three directions: the east surface heat exchanger 21a, the west surface heat exchanger 22a, and the ejector 23. At this time, the flow rate of the refrigerant liquid flowing in each of the three directions is desirably adjusted by providing a structural portion that is a pressure loss such as a bend, a throttle, and a valve in the flow path from branching to merging.

### Effect of Embodiment 4

The cooling device 100 according to Embodiment 4 can promote evaporation by flowing, into the cooler 4, the vapor generated by automatically using the heat load due to the incidence of the sunlight without using the four-way valve 6, the three-way valve 61, or other on-off valves. Accordingly, the electronic device 2 that determines the position of the sunlight and controls the four-way valve 6 and the like and the control program thereof are not required. As a result, it is possible to reduce the possibility of a malfunction due to an abnormality in the electronic device 2 that controls the four-way valve 6 and the like or the control program thereof during operation.

The refrigerant liquid having flowed out of the east surface heat exchanger 21a and the west surface heat exchanger 22a without evaporating merges with the gas-liquid two-phase flow having flowed out of the cooler 4 and cools and condenses the vapor. Accordingly, it is possible to obtain the effect of increasing the amount of heat exhaust by using, as the heat dissipation unit such as the south surface heat exchange unit 51 and the north surface heat exchange unit 52, the east surface heat exchange unit 21 or the west surface heat exchange unit 22 that is not receiving heat from the sunlight as described in Embodiment 1.

Since the refrigerant is branched in the three directions after being discharged from the pump 3, the flow rate of the refrigerant flowing into the cooler 4 reduces. However, the flow rate of the refrigerant flowing into the cooler 4 can be adjusted by adjusting the pressure loss using a bending, a throttle, or the like in individual portions of the refrigerant flow path 10. This can make adjustment so as to prevent the occurrence of dryout in which all the refrigerant liquid evaporates on the exit side of the cooler 4. In contrast, the inhibition of evaporation by the inflow of excess refrigerant liquid into the cooler 4 can also be suppressed.

### Other structures

### Modification 1 of Embodiment 4

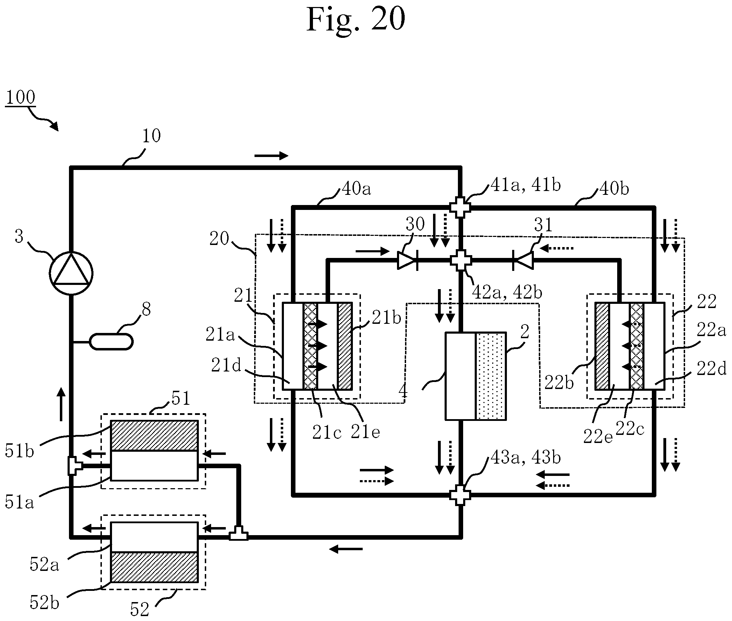

The structure of the cooling device 100 according to Modification 1 of Embodiment 4 will be described with reference to FIG. 20.

The solid arrows in FIG. 20 indicate the mainstream direction of the refrigerant and the dotted arrows indicate the mainstream direction of the refrigerant when the flow direction of part of the refrigerant is switched.

The cooling device 100 has an east side check valve 30 in the portion of the first branch flow path 40a through which the east surface heat exchanger 21a merges with an upstream portion of the cooler 4. Similarly, the cooling device 100 has a west side check valve 31 in the portion of the second branch flow path 40b through which the west surface heat exchanger 22a merges with an upstream portion of the cooler 4. In FIG. 20, the ejector 23 is not provided at the position at which the east surface heat exchanger 21a and the west surface heat exchanger 22a merge with an upstream portion of the cooler 4. However, the ejector 23 may be provided at the merging position as illustrated in FIG. 19.

Each of the east side check valve 30 and the west side check valve 31 may have a structure in which a closing component such as a ball, a pole, or a vane is present and the closing component moves and blocks the flow path immediately after a flow in an opposite direction occurs. Alternatively, the east side check valve 30 and the west side check valve 31 may have a structure in which the flow path resistance becomes very large when a backflow occurs as in a Tesla valve. The east side check valve 30 and the west side check valve 31 may have another structure as long as the refrigerant flows substantially in one direction.

In the cooling device 100 according to Embodiment 4, when heat is not received from the sunlight and the pressure loss of the first branch flow path 40a after the refrigerant is discharged from the pump 3 and branched in three directions before the refrigerant flows into the east surface heat exchanger 21a is large, the pressure of the east surface heat exchanger 21a reduces as a whole. Then, when the drawing force by the ejector 23 is small, the refrigerant liquid flows back from the ejector 23 to the east surface heat exchanger 21a. Alternatively, when a simple confluence portion is used instead of the ejector 23, the refrigerant liquid also flows back from the confluence portion to the east surface heat exchanger 21a. The case of the west surface heat exchanger 22a is the same as in the east surface heat exchanger 21a.

When the refrigerant liquid flows back, the amount of the refrigerant flowing into the cooler 4 reduces. This may cause dryout in which all the refrigerant liquid evaporates on the exit side of the cooler 4, and suddenly raise the temperature of the electronic device 2, which exchanges heat with the exit side of the cooler 4.

The cooling device 100 according to Embodiment 4 uses the east side check valve 30 and the west side check valve 31. This can stop the backflow from the confluence portion when the east surface heat exchange unit 21 or the west surface heat exchange unit 22 is not receiving heat from the sunlight, thereby preventing occurrence of dryout on the exit side of the cooler 4. Alternatively, when the east surface heat exchange unit 21 or the west surface heat exchange unit 22 receives heat from the sunlight, the refrigerant vapor from the east surface heat exchanger 21a or the west surface heat exchanger 22a that is receiving heat can merge with the refrigerant flow path 10.

### Modification 2 of Embodiment 4

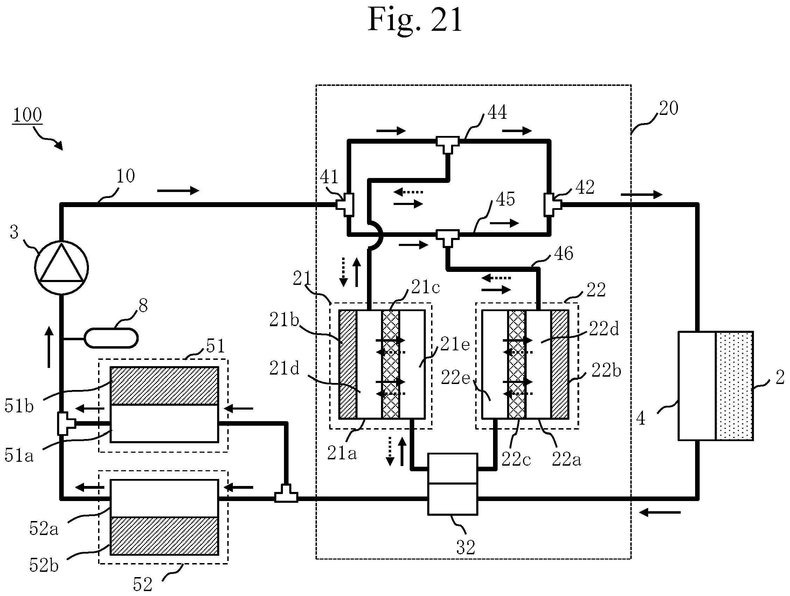

The structure of the cooling device 100 according to Modification 2 of Embodiment 4 will be described with reference to FIG. 21.

The solid arrows in FIG. 21 indicate the mainstream direction of the refrigerant and the dotted arrows indicate the mainstream direction of the refrigerant when the flow direction of part of the refrigerant is switched.

The cooling device 100 has two branch flow paths 44 and 45 that are branched from the first point 41 between the pump 3 and the cooler 4 in the refrigerant flow path 10 and merge with the second point 42 between the pump 3 and the cooler 4 in the refrigerant flow path 10. The cooling device 100 has a connection flow path 46 that connects an intermediate portion of one branch flow path 44 to an intermediate portion of the other branch flow path 45. The east surface heat exchange unit 21 and the west surface heat exchange unit 22 are connected to the connection flow path 46 in the order from the branch flow path 44 to the branch flow path 45. A rear heat exchanger 32 is provided between the east surface heat exchange unit 21 and the west surface heat exchange unit 22 in the connection flow path 46. In the rear heat exchanger 32, the solid wall separates the flow path connecting the east surface heat exchanger 21a and the west surface heat exchanger 22a from the flow path connecting the cooler 4 with the south surface heat exchanger 51a and the north surface heat exchanger 52a so that the refrigerant flowing through the flow path connecting the east surface heat exchanger 21a and the west surface heat exchanger 22a does not mix with the refrigerant flowing through the flow path connecting the cooler 4 with the south surface heat exchanger 51a and the north surface heat exchanger 52a, and heat exchange is performed via the solid wall.

The east surface heat exchanger 21a is provided with the first wick 21c. The first wick 21c is formed by grooves, mesh, fiber, or a porous body and includes a plurality of narrow voids. The inside of the east surface heat exchange unit 21 is divided into two spaces by the first wick 21c. The flow path connected to the branch flow path 44 is connected to the space 21d and the flow path connected to the rear heat exchanger 32 is connected to the space 21e. The east side heat exchange surface 21b is provided in the portion close to the space 21d.

The west surface heat exchanger 22a is provided with the second wick 22c. The second wick 22c is formed by grooves, mesh, fiber, or a porous body and includes a plurality of narrow voids. The inside of the west surface heat exchanger 22a is divided into two spaces by the second wick 22c. The flow path connected to the branch flow path 45 is connected to the space 22d and the flow path connected to the rear heat exchanger 32 is connected to the space 22e. The west side heat exchange surface 22b is provided in the portion close to the space 22d.

When the sunlight is incident on the east side heat exchange surface 21b and the east side heat exchange surface 21b receives heat, the refrigerant liquid evaporates in the east surface heat exchanger 21a. Then, a gas-liquid interface is formed in the first wick 21c so that mainly refrigerant vapor gathers in the space 21d and mainly refrigerant liquid gathers in the space 21e. The capillary force generated at the gas-liquid interface causes a flow of the refrigerant liquid toward the space 21d close to the refrigerant vapor through the first wick 21c while evaporating, an increase in the pressure in the space 21d containing mainly the refrigerant vapor, and a reduction in the pressure in the space 21e containing mainly the refrigerant liquid.

As a result, the flow of the refrigerant indicated by the solid arrows in FIG. 21 is generated as described below. The refrigerant discharged from the pump 3 is branched and then flows into the branch flow path 44 and the branch flow path 45. After that, the refrigerant having flowed into the branch flow path 45 is further branched and part thereof flows into the west surface heat exchanger 22a. The refrigerant liquid having flowed into the west surface heat exchanger 22a passes through the second wick 22c as the liquid with a lower temperature due to heat dissipation because the sunlight is not incident on the west side heat exchange surface 22b. The refrigerant liquid with low temperature having passed through the second wick 22c flows out of the west surface heat exchanger 22a and flows into the rear heat exchanger 32. The refrigerant liquid with low temperature that has flowed into the rear heat exchanger 32 exchanges heat with the gas-liquid two-phase flow that has flowed out of the cooler 4. As a result, the temperature of the refrigerant liquid having flowed in from the west surface heat exchanger 22a rises, and part of vapor of the gas-liquid two-phase flow having flowed out of the cooler 4 condenses. The refrigerant liquid having risen in temperature by heat exchange flows into the east surface heat exchanger 21a. Then, the incidence of the sunlight on the east side heat exchange surface 21b causes the refrigerant liquid having flowed into the east surface heat exchanger 21a to receive heat and evaporate. Then, the capillary force at the gas-liquid interface formed in the first wick 21c causes the evaporated refrigerant containing vapor to pass through the first wick 21c and flow out of the east surface heat exchanger 21a. The refrigerant containing vapor having flowed out of the east surface heat exchanger 21a merges with the mainstream of the refrigerant liquid in the portion of the refrigerant flow path 10 from the pump 3 to the cooler 4 via the branch flow path 44. This causes the refrigerant that is a gas-liquid two-phase flow to flow into the cooler 4. As a result, evaporation is promoted in the cooler 4 and the electronic device 2 is cooled evenly.

The case in which the sunlight is incident on the west side heat exchange surface 22b and the west surface heat exchange unit 22 is receiving heat is the same as the corresponding case for the east surface heat exchange unit 21. When the sunlight is incident on the west side heat exchange surface 22b and the west surface heat exchange unit 22 is receiving heat, a flow of the refrigerant is indicated by the dotted arrows in FIG. 21.

The gas-liquid two-phase flow having flowed out of the cooler 4 is cooled by the refrigerant having flowed out of the heat exchange unit that dissipated heat because the sunlight was not incident thereon in the rear heat exchanger 32. Since this condenses part of the vapor, the heat exchange unit on which the sunlight is not incident is also used as a heat dissipation unit.

In the cooling device 100 according to Embodiment 4 and the cooling device 100 according to Modification 1 of Embodiment 4, the refrigerant discharged from the pump 3 is branched and then flows into the cooler 4. Since this makes the flow rate of the refrigerant in the cooler 4 less than the flow rate of the refrigerant in the pump 3, the output power of the pump 3 needs to be increased. In contrast, in the cooling device 100 according to Modification 2 of Embodiment 4, even when the refrigerant is discharged from the pump 3 and branched to the individual heat exchange units, the refrigerants flow into the cooler 4 after merging with each other again. Accordingly, since the flow rate of the refrigerant in the cooler 4 is equal to the flow rate of the refrigerant in the pump 3, there is no need to increase the output power of the pump 3.

### Modification 3 of Embodiment 4

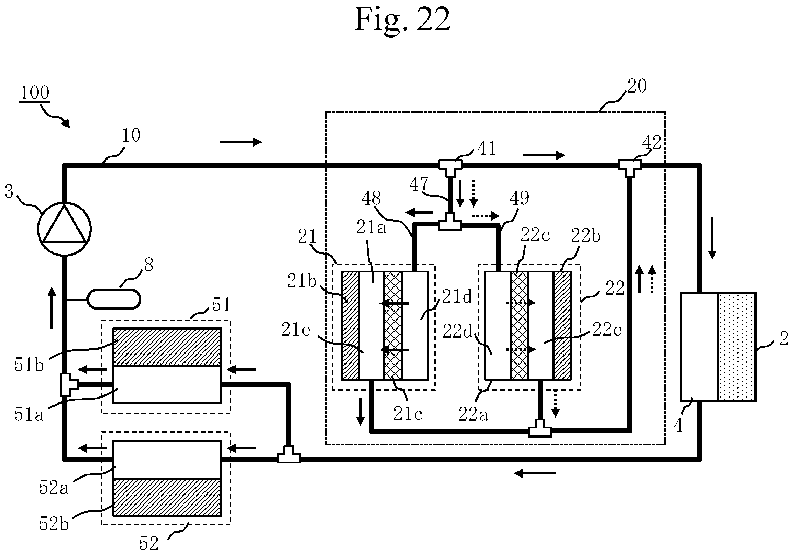

The structure of the cooling device 100 according to Modification 3 of Embodiment 4 will be described with reference to FIG. 22.

The solid arrows in FIG. 22 indicate the mainstream direction of the refrigerant and the dotted arrows indicate the mainstream direction of the refrigerant when the flow direction of part of the refrigerant is switched.

The cooling device 100 has a branch flow path 47 that is branched from the first point 41 between the pump 3 and the cooler 4 in the refrigerant flow path 10 and merges with the second point 42 between the pump 3 and the cooler 4 in the refrigerant flow path 10. The branch flow path 47 is branched into two tributaries 48 and 49 in an intermediate portion and then the tributary 48 and the tributary 49 merge with each other again. The east surface heat exchange unit 21 is connected to the tributary 48 and the west surface heat exchange unit 22 is connected to the tributary 49.

The east surface heat exchanger 21a is provided with the first wick 21c. The first wick 21c is formed by grooves, mesh, fiber, or a porous body and includes a plurality of narrow voids. The inside of the east surface heat exchange unit 21 is divided into two spaces by the first wick 21c. The flow path connected to the first point 41 is connected to the space 21d and the flow path connected to the second point 42 is connected to the space 21e. The east side heat exchange surface 21b is provided in the portion close to the space 21e.

The west surface heat exchanger 22a is provided with the second wick 22c. The second wick 22c is formed by grooves, mesh, fiber, or a porous body and includes a plurality of narrow voids. The inside of the west surface heat exchanger 22a is divided into two spaces by the second wick 22c. The flow path connected to the first point 41 is connected to the space 22d and the flow path connected to the second point 42 is connected to the space 22e. The west side heat exchange surface 22b is provided in the portion close to the space 22e.

When the sunlight is incident on the east side heat exchange surface 21b and the east side heat exchange surface 21b receives heat, the refrigerant liquid evaporates in the east surface heat exchanger 21a. Then, a gas-liquid interface is formed in the first wick 21c so that mainly refrigerant vapor gathers in the space 21e and mainly refrigerant liquid gathers in the space 21d. The capillary force generated at the gas-liquid interface causes a flow of the refrigerant liquid toward the space close to the refrigerant vapor through the first wick 21c while evaporating, an increase in the pressure in the space 21e containing mainly the refrigerant vapor, and a reduction in the pressure in the space 21d containing mainly the refrigerant liquid.

As a result, the flow of the refrigerant indicated by the solid arrows in FIG. 22 is generated as described below. Part of the refrigerant discharged from the pump 3 flows into the branch flow path 47. Part of the refrigerant having flowed into the branch flow path 47 flows into the tributary 48 and then flows into the east surface heat exchanger 21a. The incidence of the sunlight on the east side heat exchange surface 21b causes the refrigerant liquid having flowed into the east surface heat exchanger 21a to receive heat and evaporate. Then, the capillary force at the gas-liquid interface formed in the first wick 21c causes the evaporated refrigerant containing vapor to pass through the first wick 21c and flow out of the east surface heat exchanger 21a. The refrigerant containing the vapor having flowed out of the east surface heat exchanger 21a merges with the refrigerant liquid flowing through the refrigerant flow path 10 at the second point 42. This causes the mainstream of the refrigerant that is a gas-liquid two-phase flow to flow into the cooler 4. As a result, evaporation is promoted in the cooler 4 and the electronic device 2 is cooled evenly.

In contrast, the sunlight is not incident on the west side heat exchange surface 22b and the west side heat exchange surface 22b is not receiving heat. Accordingly, the west surface heat exchanger 22a as well as the second wick 22c is filled with the refrigerant liquid and a capillary force is not generated in the second wick 22c. Accordingly, the inflow and outflow of the refrigerant liquid on the west side heat exchange surface 22b is less and the vapor thereof is less condensed when the refrigerant liquid merges with the gas-liquid two-phase flow having flowed out of the east surface heat exchanger 21a.

Depending on the pressure loss in the portion of the refrigerant flow path 10 between the east surface heat exchanger 21a and the west side heat exchange surface 22b, a backflow may occur in which the gas-liquid two-phase flow having flowed out of the east surface heat exchanger 21a is branched in the confluence portion and flows in from the outlet of the west surface heat exchanger 22a. As a result of the backflow, the gas-liquid two-phase flow having flowed in from the outlet of the west surface heat exchanger 22a is cooled by the heat dissipation from the west side heat exchange surface 22b and the vapor condenses. This causes the gas-liquid two-phase flow to become the refrigerant liquid, pass through the second wick 22c, and flow out of the inlet of the west surface heat exchanger 22a. As a result, part of the heat received from the east side heat exchange surface 21b is dissipated on the west side heat exchange surface 22b. Accordingly, the east side heat exchange surface 21b warmed by the incidence of the sunlight can be cooled without the direct intervention of the mainstream in the refrigerant flow path 10 through which the refrigerant is circulated by the pump 3. Accordingly, it is possible to prevent heat from being conducted from the east side heat exchange surface 21b through the frame 1a to the electronic device 2 attached to the frame 1a around the east side heat exchange surface 21b.

The case in which the sunlight is incident on the west side heat exchange surface 22b and the west surface heat exchange unit 22 is receiving heat is the same as the corresponding case for the east surface heat exchange unit 21. When the sunlight is incident on the west side heat exchange surface 22b and the west surface heat exchange unit 22 is receiving heat, a flow of the refrigerant is indicated by the dotted arrows in FIG. 22.

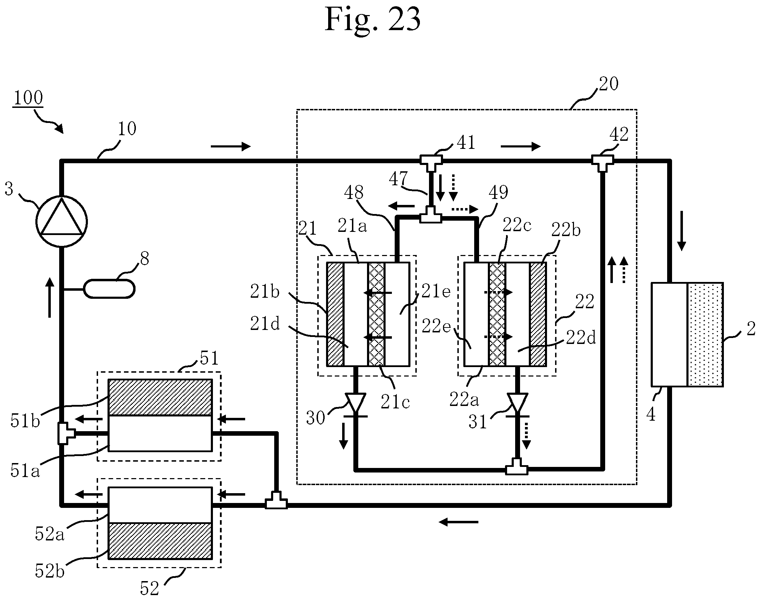

When the gas-liquid two-phase flow generated from the heat exchange unit on which the sunlight is incident and which is receiving heat flows back to the heat exchange unit on which the sunlight is not incident and which is not receiving heat, the vapor flowing into the cooler 4 may become insufficient. In this case, the east side check valve 30 and the west side check valve 31 are desirably provided at the positions immediately after the outflow from the east surface heat exchanger 21a and the west surface heat exchanger 22a, respectively, as illustrated in FIG. 23 to suppress the backflow.

Alternatively, resistive elements, such as a throttle, a bend, and a valve may also be provided in the flow path through which the refrigerant discharged from the pump 3 after being branched into the tributaries 48 and 49 before merging again passes. This can increase the flow rate of the refrigerant flowing through the tributaries 48 and 49 and the flow rate of the gas-liquid two-phase flow returning back from the east surface heat exchanger 21a or the west surface heat exchanger 22a.

### Embodiment 5.

Embodiment 5 differs from Embodiment 4 in that the secondary flow path 28 to which the east surface heat exchange unit 21 and the west surface heat exchange unit 22 are connected is provided in addition to the refrigerant flow path 10. In Embodiment 5, this difference will be described and the same points will not be described.

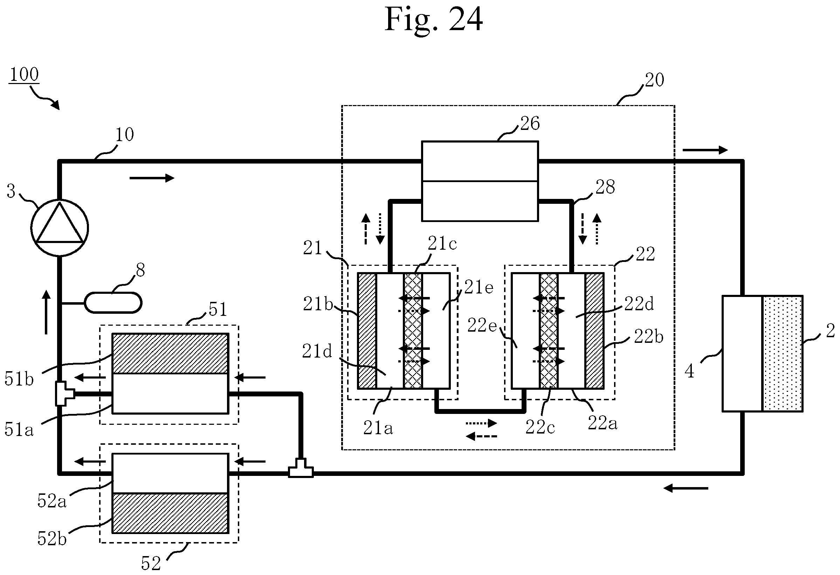

The structure of the cooling device 100 according to Embodiment 5 will be described with reference to FIG. 24.

In FIG. 24, the solid arrows indicate the mainstream direction of the refrigerant, the dashed arrows indicate the flow direction of the refrigerant flowing through the secondary flow path 28, and the dotted arrows indicate the flow direction of the refrigerant when the flow direction of the refrigerant flowing through the secondary flow path 28 is switched.

The cooling device 100 has, as the vapor mixing unit 20, the secondary flow path 28 in which the front heat exchanger 26, the east surface heat exchange unit 21, and the west surface heat exchange unit 22 are sequentially connected by piping. The secondary flow path 28 is formed annularly and the secondary refrigerant circulates therethrough. The refrigerant circulating through the refrigerant flow path 10 and the refrigerant circulating through the secondary flow path 28 may be of the same type or of different types.

The front heat exchanger 26 is the heat exchanger for heating the refrigerant flowing into the cooler 4 in the refrigerant flow path 10. The front heat exchanger 26 is provided in the portion of the refrigerant flow path 10 through which the refrigerant passes after being discharged from the pump 3 before reaching the cooler 4. In the front heat exchanger 26, a solid wall separates the flow paths from each other so that the refrigerant flowing through the refrigerant flow path 10 does not mix with the secondary refrigerant flowing through the secondary flow path 28, and heat exchange is performed via the solid wall.

The east surface heat exchanger 21a is provided with the first wick 21c. The first wick 21c is formed by grooves, mesh, fiber, or a porous body and includes a plurality of narrow voids. The inside of the east surface heat exchanger 21a is divided into two spaces by the first wick 21c. The flow path connected to the front heat exchanger 26 is connected to the space 21d and the flow path connected to the west surface heat exchange unit 22 is connected to another space 21e. The east side heat exchange surface 21b is provided in the portion close to the space 21d.

The west surface heat exchanger 22a is provided with the second wick 22c. The second wick 22c is formed by grooves, mesh, fiber, or a porous body and includes a plurality of narrow voids. The inside of the west surface heat exchanger 22a is divided into two spaces by the second wick 22c. The flow path connected to the front heat exchanger 26 is connected to the space 22d and the flow path connected to the east surface heat exchange unit 21 is connected to another space 22e. The west side heat exchange surface 22b is provided in the portion close to the space 22d.

### Description of operation

When the sunlight is incident on the east side heat exchange surface 21b and the east side heat exchange surface 21b receives heat, the refrigerant liquid evaporates in the east surface heat exchanger 21a. Then, a gas-liquid interface is formed in the first wick 21c so that mainly refrigerant vapor gathers in the space 21d and mainly refrigerant liquid gathers in the space 21e. The capillary force generated at the gas-liquid interface causes a flow of the refrigerant liquid toward the space 21d close to the refrigerant vapor through the first wick 21c while evaporating, an increase in the pressure in the space 21d containing mainly the refrigerant vapor, and a reduction in the pressure in the space 21e containing mainly the refrigerant liquid.

As a result, the flow of the refrigerant indicated by the dashed arrows in FIG. 24 is generated in the secondary flow path 28 as described below. The refrigerant vapor generated in the east surface heat exchanger 21a by receiving heat from the sunlight on the east side heat exchange surface 21b rises in pressure by the capillary force in the first wick 21c, flows out of the east surface heat exchanger 21a, and flows into the front heat exchanger 26. The refrigerant having flowed into the front heat exchanger 26 passes heat to the refrigerant flowing through the refrigerant flow path 10, and part of vapor condenses, flows out of the front heat exchanger 26, and flows into the west surface heat exchanger 22a. Since the sunlight is not incident on the west side heat exchange surface 22b, the refrigerant dissipates heat. Accordingly, the refrigerant vapor not having been completely condensed in the front heat exchanger 26 is cooled and condensed by the west surface heat exchanger 22a and then becomes a refrigerant liquid. The refrigerant liquid passes through the second wick 22c, flows out of the west surface heat exchanger 22a, and flows into the east surface heat exchanger 21a again.

The case in which the sunlight is incident on the west side heat exchange surface 22b and the west surface heat exchange unit 22 is receiving heat is the same as the corresponding case for the east surface heat exchange unit 21. When the sunlight is incident on the west side heat exchange surface 22b and the west surface heat exchange unit 22 is receiving heat, a flow of the refrigerant is indicated by the dotted arrows in FIG. 24.

The refrigerant liquid having been discharged from the pump 3 and flowed into the front heat exchanger 26 receives heat from the vapor generated by heating in the east surface heat exchanger 21a or the west surface heat exchanger 22a. As a result, part of the refrigerant liquid evaporates, a gas-liquid two-phase flow is generated, and the gas-liquid two-phase flow flows into the cooler 4. Accordingly, evaporation is promoted and uneven cooling of the electronic device 2 is suppressed. It should be noted that the temperature of the secondary refrigerant in the secondary flow path 28 is adjusted so as to become higher than the saturated vapor temperature of the refrigerant in the refrigerant flow path 10 so that the refrigerant in the refrigerant flow path 10 can evaporate by receiving heat from the secondary flow path 28 in the front heat exchanger 26.

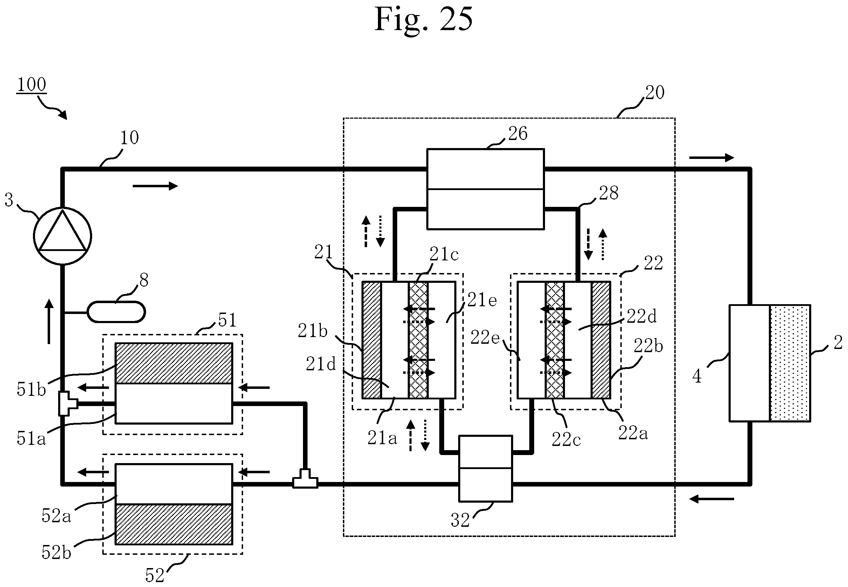

As illustrated in FIG. 25, the rear heat exchanger 32 may be provided in the portion of the secondary flow path 28 that connects the east surface heat exchanger 21a and the west surface heat exchanger 22a to each other. In the rear heat exchanger 32, the refrigerant between the cooler 4 and the south and north surface heat exchangers 51a and 52a in the refrigerant flow path 10 exchanges heat with the secondary refrigerant in the secondary flow path 28 via the solid wall so that the refrigerant in the refrigerant flow path 10 does not mix with the secondary refrigerant in the secondary flow path 28.

In this case, the refrigerant liquid with a temperature lower than the saturated vapor temperature of the refrigerant in the refrigerant flow path 10 flows into the rear heat exchanger 32 from the east surface heat exchanger 21a or the west surface heat exchanger 22a that is dissipating heat. Accordingly, part of the vapor of the gas-liquid two-phase flow in the refrigerant flow path 10 having flowed out of the cooler 4 is cooled and condensed in the rear heat exchanger 32 and flows into the south surface heat exchanger 51a and the north surface heat exchanger 52a. As a result, it is possible to obtain the effect of promoting condensation by cooling the gas-liquid two-phase flow having flowed out of the cooler 4 by using the heat exchange unit that is not receiving heat from the sunlight and is dissipating heat.

During operation of the artificial satellite 200, a device near the outer wall of the main body 1 may be damaged due to a collision with space debris or the like. The east surface heat exchange unit 21 and the west surface heat exchange unit 22 that face the outer wall may also be damaged due to a collision with space debris or the like.

In the cooling device 100 according to Embodiment 5, the east surface heat exchange unit 21 and the west surface heat exchange unit 22 are connected to the secondary flow path 28, which is different from the refrigerant flow path 10. Accordingly, even when the side close to the secondary flow path 28 does not function when space debris or the like collides with the east surface heat exchange unit 21 or the west surface heat exchange unit 22, the minimum function as the cooling device can be maintained. However, on the side of the refrigerant flow path 10, a problem of uneven cooling occurs in that the temperature of the electronic device 2 close to the inlet of the cooler 4 become high.

It should be noted that, when the secondary flow path 28 includes a plurality of independent secondary flow paths 28, even when one of the secondary flow paths 28 does not function, another of the secondary flow paths 28 can function, thereby suppressing uneven cooling of the electronic device 2.

In addition, in the cooling device 100 according to Embodiment 5 causes the vapor generated by using heat generation from the electronic device 2 and the heat load due to the incidence of the sunlight to flow into the cooler 4 without using a device for forcible heating unlike other embodiments. This can obtain the effect of cooling the electronic device 2 evenly by promoting evaporation in the cooler 4.

### Modification 1 of Embodiment 5

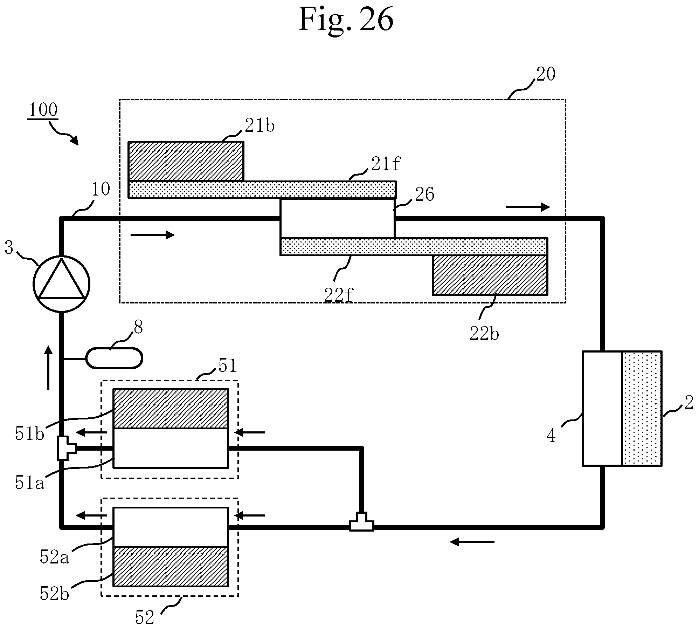

The structure of the cooling device 100 according to Modification 1 of Embodiment 5 will be described with reference to FIG. 26.

The solid arrows in FIG. 26 indicate the mainstream direction of the refrigerant flowing through the refrigerant flow path 10.

The cooling device 100 has an east side heat pipe 21f and a west side heat pipe 22f instead of the secondary flow path 28, the east surface heat exchanger 21a, and the west surface heat exchanger 22a.

The front heat exchanger 26 is provided in the portion of the refrigerant flow path 10 through which the refrigerant passes after being discharged from the pump 3 before flowing into the cooler 4. One ends of the east side heat pipe 21f and the west side heat pipe 22f are connected to the front heat exchanger 26. The east side heat exchange surface 21b is connected to the other end of the east side heat pipe 21f, and the west side heat exchange surface 22b is connected to the other end of the west side heat pipe 22f.

The insides of the east side heat pipe 21f and the west side heat pipe 22f are independent flow paths that do not intersect with the refrigerant flow path 10. The east side heat pipe 21f and the west side heat pipe 22f transport heat by a flow of the refrigerant due to the capillary force using the temperature difference between both ends. The refrigerants flowing through the east side heat pipe 21f and the west side heat pipe 22f and the refrigerant flowing through the refrigerant flow path 10 may be of different types.

When the sunlight is incident on the east side heat exchange surface 21b and the east side heat exchange surface 21b receives heat, a temperature difference occurs between one end of the east side heat pipe 21f connected to the east side heat exchange surface 21b and the other end of the east side heat pipe 21f connected to the front heat exchanger 26. This temperature difference causes the gas-liquid two-phase refrigerant in the east side heat pipe 21f to evaporate and condense repeatedly and circulate due to the capillary force. This transports heat from the east side heat exchange surface 21b to the front heat exchanger 26. The refrigerant liquid having been discharged from the pump 3 and flowed into the front heat exchanger 26 receives heat from the east side heat exchange surface 21b via the east side heat pipe 21f and part thereof evaporates. As a result, the gas-liquid two-phase refrigerant flows into the cooler 4, evaporation is promoted, and the electronic device 2 is cooled evenly.

The supercooled refrigerant liquid sufficiently cooled by the south surface heat exchanger 51a and the north surface heat exchanger 52a flows into the front heat exchanger 26 by the pump 3. Accordingly, the temperature difference between one end of the west side heat pipe 22f connected to the west side heat exchange surface 22b on which the sunlight is not incident and the other end of the west side heat pipe 22f connected to the front heat exchanger 26 is small. Accordingly, the heat transfer through the west side heat pipe 22f reduces and the evaporation of the refrigerant liquid having flowed into the front heat exchanger 26 from the pump 3 is not inhibited.

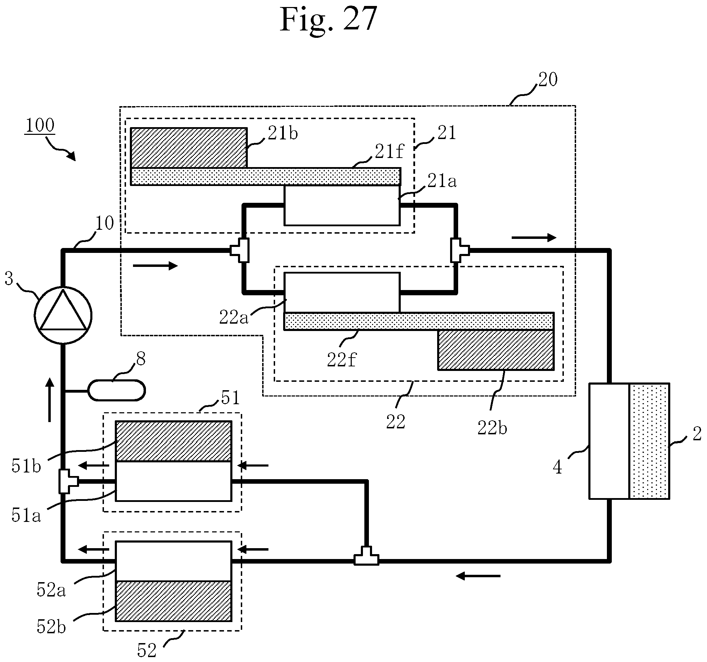

However, when the sunlight is incident on the south side heat exchange surface 5b or the north side heat exchange surface 5b at a low incident angle, the cooling capacity in the south surface heat exchanger 51a and the north surface heat exchanger 52a reduces. Accordingly, the temperature of the supercooled refrigerant liquid flowing from the pump 3 to the front heat exchanger 26 becomes high. As a result, one end of the west side heat pipe 22f connected to the west side heat exchange surface 22b has a low temperature and the other end of the west side heat pipe 22f connected to the front heat exchanger 26 has a high temperature, thereby causing a temperature difference. Then, the refrigerant liquid having been discharged from the pump 3 and flowed into the front heat exchanger 26 cools the front heat exchanger 26 via the west side heat pipe 22f. In this case, the refrigerant liquid having flowed into the front heat exchanger 26 from the pump 3 may be inhibited from evaporating due to the heat received through the east side heat pipe 21f. Accordingly, the structure as illustrated in FIG. 27 may be adopted.

In the structure illustrated in FIG. 27, the east surface heat exchanger 21a and the west surface heat exchanger 22a are connected, instead of the front heat exchanger 26, in parallel with the portion of the refrigerant flow path 10 from the pump 3 to the cooler 4. One end of the east side heat pipe 21f is connected to the east surface heat exchanger 21a and the other end of the east side heat pipe 21f is connected to the east side heat exchange surface 21b. One end of the west side heat pipe 22f is connected to the west surface heat exchanger 22a and the other end of the west side heat pipe 22f is connected to the west side heat exchange surface 22b.

In this structure, the refrigerant is not directly cooled by the west side heat pipe 22f immediately before and immediately after vapor is generated by the east surface heat exchanger 21a. Accordingly, the vapor having grown in the east surface heat exchanger 21a enough not to easily disappear can flow into the cooler 4.

The operation when the sunlight is incident on the west side heat exchange surface 22b and the west surface heat exchange unit 22 is receiving heat is the same as the operation in the case of the east surface heat exchange unit 21.

In the cooling device 100 according to Modification 1 of Embodiment 5, the front heat exchanger 26 illustrated in FIG. 26 or the east surface heat exchanger 21a and the west surface heat exchanger 22a illustrated in FIG. 27 may be contained in the main body 1 of the artificial satellite 200. This can transport heat to the east side heat exchange surface 21b and the west side heat exchange surface 22b disposed on the external wall surface of the main body 1 via the east side heat pipe 21f and the west side heat pipe 22f. Accordingly, even when space debris or the like collides with the east side heat exchange surface 21b or the west side heat exchange surface 22b, the minimum cooling capacity can be maintained by preventing the refrigerant flow path 10 and the devices connected to the refrigerant flow path 10 from being damaged.

In other modifications of Embodiment 3, a member with a high thermal conductivity has been used instead of the heat pipe. In Modification 1 of Embodiment 5 as well, a member with a high thermal conductivity may be used instead of the heat pipe.

However, in Modification 1 of Embodiment 5, it is desirable that the temperature difference circulates the internal refrigerant and improves heat transport capacity in the east side heat pipe 21f or the west side heat pipe 22f receiving heat from the sunlight and that reduction in the temperature difference stops circulating the refrigerant and reduces the heat transport capacity in the east side heat pipe 21f or the west side heat pipe 22f that is not receiving heat from the sunlight. Accordingly, it is desirable to use the heat pipes with an adjusted internal structure or an adjusted refrigerant amount so as to achieve this.

### Embodiment 6.

In Embodiment 6, the combination of Embodiments 1 to 5 and the modifications of these embodiments will be described.

Some of Embodiments 1 to 5 and modifications of these embodiments may be combined and implemented. Alternatively, any one or some of them may be partially implemented. It should be noted that the present invention is not limited to the embodiments and the modifications described above and various modifications can be made as necessary.

Combinations of Embodiments 1 to 5 and the modifications thereof achieve at least one of higher evaporation promoting effects by the cooler 4 and complementary effects.

For example, the structure that uses the following two structures is allowed: the structure indicated in Embodiment 2 in which the part of the gas-liquid two-phase refrigerant having flowed out of the cooler 4 is returned to an upstream portion of the cooler 4 using the ejector 23 and the structure as indicated in Embodiment 4 in which the vapor generated by the heat exchange unit that is receiving heat from the sunlight flows into an upstream portion of the cooler 4.

In this structure, the ejector 23 is desirably provided at a position at which the vapor returned by the ejector 23 does not flow into the heat exchanger of the heat exchange unit that is receiving heat from the sunlight. In this structure, the vapor is returned by the ejector 23 even when the artificial satellite 200 is hidden behind the earth and the sunlight is not incident thereon. This can cool the electronic device 2 evenly and prevent heat from being conducted to the frame 1a around the heat exchange surface and the electronic device 2 by cooling the heat exchange surface on the side receiving heat from the sunlight when the sunlight is incident thereon.

In addition, for example, the structure that uses the following two structures is allowed: the structure indicated in Embodiment 3 in which the heat generated in the electronic device 2 is transported to an upstream portion of the cooler 4 and the structure as indicated in Embodiment 1 or Embodiment 4 in which the vapor generated in the heat exchange unit that is receiving heat from the sunlight flows into an upstream portion of the cooler 4.

This structure allows the heat generated in the electronic device 2 to be transported to the heat exchanger of the heat exchange unit that is receiving heat from the sunlight. This can generate vapor in the heat exchanger of the heat exchange unit that is receiving heat from the sunlight even when the amount of heat sufficient for evaporating an upstream portion of the cooler 4 cannot be transported from the electronic device 2 as indicated in Embodiment 3. As a result, even when the temperature of the medium, such as the heat pipe 27, that transports the heat generated in the electronic device 2 is equal to or less than the saturated vapor temperature of the refrigerant flow path 10, normal operation is ensured.

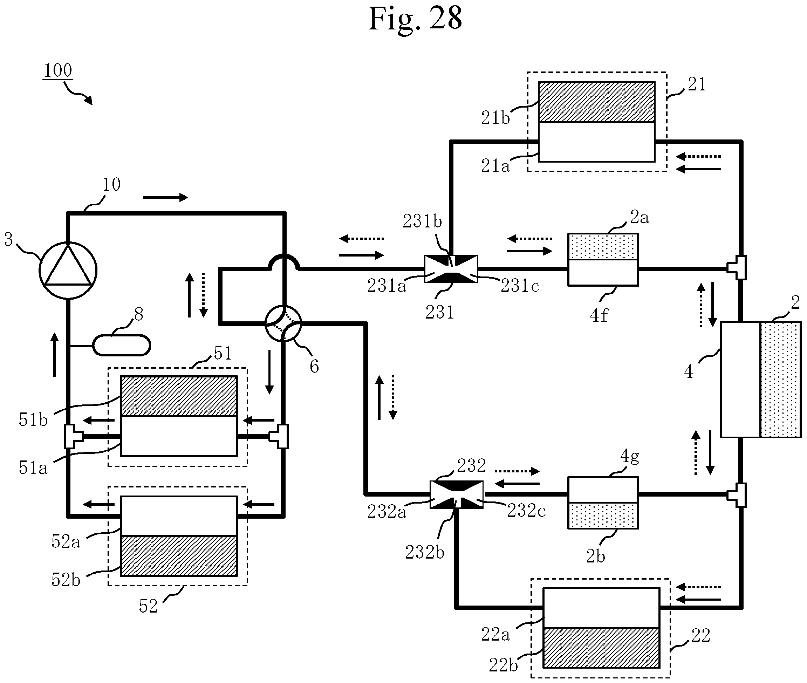

The structure of the cooling device 100 according to Embodiment 6 will be described with reference to FIG. 28.

In FIG. 28, the solid arrows indicate the flow direction of the refrigerant flowing through the refrigerant flow path 10 and the dotted arrows indicate the flow direction of the refrigerant when the flow direction of part of the refrigerant is switched.

FIG. 28 illustrates the structure that uses both the structure indicated in Embodiment 1 in which the flow path is switched so that the vapor generated by the heat exchange unit that is receiving heat from the sunlight flows into an upstream portion of the cooler 4 and the structure indicated in Embodiment 2 in which part of the gas-liquid two-phase refrigerant having flowed out of the cooler 4 is returned to an upstream portion of the cooler 4 using the ejector 23.

In this case, even when the mainstream direction of the refrigerant is switched to the opposite direction by switching the flow path indicated in Embodiment 1, the flow in the ejector 23 and in the branch portion absorbed from the ejector 23 is not necessarily be reversed. Accordingly, the structure illustrated in FIG. 28 is desirable.

FIG. 28 illustrates the case in which the cooling target includes not only the electronic device 2, but also an east side electronic device 2a disposed on the east side in the main body 1 of the artificial satellite 200 and a west side electronic device 2b disposed on the west side in the main body 1 of the artificial satellite 200.

In the structure in FIG. 28, the four-way valve 6 is connected to a vena contracta 231a of an east side ejector 231 and a vena contracta 232a of a west side ejector 232. The refrigerant flow path 10 is configured so that the mainstream direction of the refrigerant can be switched between directions (1) and (2) below by the four-way valve 6. (1) The refrigerant discharged from the pump 3 flows toward the east side ejector 231 through the four-way valve 6 and the refrigerant having flowed out of the west side ejector 232 flows toward the south surface heat exchanger 51a and the north surface heat exchanger 52a through the four-way valve 6. (2) The refrigerant discharged from the pump 3 flows toward the west side ejector 232 through the four-way valve 6 and the refrigerant having flowed out of the east side ejector 231 flows toward the south surface heat exchanger 51a and the north surface heat exchanger 52a through the four-way valve 6.

When the sunlight is incident on the east side heat exchange surface 21b and the east side heat exchange surface 21b receives heat, the four-way valve 6 is switched so that the refrigerant discharged from the pump 3 flows toward the east side ejector 231 through the four-way valve 6. That is, the four-way valve 6 is switched in direction (1).

In the refrigerant liquid having flowed into the vena contracta 231a of the east side ejector 231 from the four-way valve 6, the static pressure is converted into the dynamic pressure by the reduction of the flow path. Then, the refrigerant liquid passes through the confluence portion 231b, recovers the static pressure by gradual expansion of the flow path in the expanding portion 231c, and flows out of the east side ejector 231. The refrigerant having flowed out of the east side ejector 231 flows into an east side cooler 4f connected to the east side electronic device 2a and performs the latent heat cooling of the east side electronic device 2a by evaporation. The gas-liquid two-phase refrigerant having flowed out of the east side cooler 4f is branched on its way to the cooler 4, part thereof flows into the east surface heat exchanger 21a, and the rest flows into the cooler 4.

In the gas-liquid two-phase refrigerant having flowed into the east surface heat exchanger 21a, vapor further grows because the sunlight is incident on the east side heat exchange surface 21b and the east side heat exchange surface 21b receives heat. Then, the gas-liquid two-phase refrigerant flows out of the east surface heat exchanger 21a and is drawn into the confluence portion 231b of the east side ejector 231 that has a low pressure.

The gas-liquid two-phase refrigerant having flowed into the cooler 4 performs the latent heat cooling of the electronic device 2 by evaporation and then flows out of the cooler 4. The refrigerant having flowed out of the cooler 4 is branched, part thereof flows into a west side cooler 4g connected to the west side electronic device 2b, and the rest flows into the west surface heat exchanger 22a.

The gas-liquid two-phase refrigerant having flowed into the west side cooler 4g performs the latent heat cooling of the west side electronic device 2b by evaporation and flows out of the west side cooler 4g. Then, the gas-liquid two-phase refrigerant flows into the expanding portion 232c of the west side ejector 232. The gas-liquid two-phase refrigerant having flowed into the west surface heat exchanger 22a dissipates heat because the sunlight is not incident on the west side heat exchange surface 22b, part of vapor condenses, and the gas-liquid two-phase refrigerant flows out of the west surface heat exchanger 22a. Then, the refrigerant having flowed out merges with the confluence portion 232b of the west side ejector 232.

The refrigerant having merged in the west side ejector 232 flows out of the west side ejector 232 through the vena contracta 232a. Then, the refrigerant having flowed out flows into the south surface heat exchanger 51a and the north surface heat exchanger 52a through the four-way valve 6.

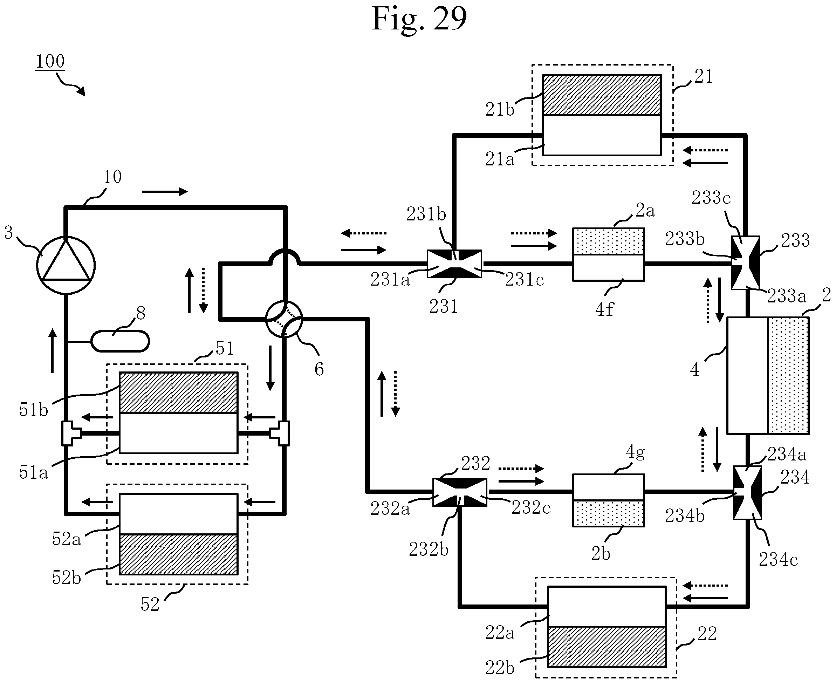

When the gas-liquid two-phase flow having flowed out of the cooler 4 is branched into the west side cooler 4g and the west surface heat exchanger 22a, the flow rate of the refrigerant flowing through the west side cooler 4g may become small, possibly causing dryout. In such a case, as illustrated in FIG. 29, a second east side ejector 233 may be provided at the branch portion after flowing out of the east side cooler 4f, and a second west side ejector 234 may be provided at the branch portion after at the cooler 4. The portion of the second east side ejector 233 close to the vena contracta 233a is connected to the cooler 4, the portion thereof close to the confluence portion 233b is connected to the east side cooler 4f, and the portion thereof close to the expanding portion 233c is connected to the east surface heat exchanger 21a. The portion of the second west side ejector 234 close to the vena contracta 234a is connected to the cooler 4, the portion thereof close to the confluence portion 234b is connected to the west side cooler 4g, and the portion thereof close to the expanding portion 234c is connected to the west surface heat exchanger 22a.

In this structure, the refrigerant flows in the direction opposite to that in the structure in FIG. 28 in the west side cooler 4g by being drawn by the second west side ejector 234. However, the amount of the refrigerant flowing through the west side cooler 4g can be adjusted by the structure of the second west side ejector 234. In addition, the high enthalpy gas-liquid two-phase flow having flowed out of the cooler 4 can be cooled by the west surface heat exchanger 22a so as to generate a lower enthalpy gas-liquid two-phase flow, and then the gas-liquid two-phase flow can flow into the west side cooler 4g. Accordingly, it is possible to increase the flow rate of the refrigerant in the west side cooler 4g or prevent the occurrence of dryout without increasing the flow rate of the refrigerant in the west side cooler 4g.

The case in which the sunlight is incident on the west side heat exchange surface 22b and the west surface heat exchange unit 22 is receiving heat is the same as the corresponding case for the east surface heat exchange unit 21. When the sunlight is incident on the west side heat exchange surface 22b and the west surface heat exchange unit 22 is receiving heat, a flow of the refrigerant is indicated by the dotted arrows in FIG. 28 or 29.

In the structure illustrated in FIGS. 28 and 29, the gas-liquid two-phase refrigerant can flow into all of the cooler 4, the east side cooler 4f, and the west side cooler 4g to evenly cool all of the electronic device 2, the east side electronic device 2, and the west side electronic device 2.

When the artificial satellite 200 is hidden behind the earth and the sunlight is not incident thereon, the ejector on the upstream side returns the gas-liquid two-phase flow to the upstream of the cooler 4 regardless of the flow pass selected by switching the four-way valve. This can maintain even cooling. Even when the sunlight is incident on either the east side heat exchange surface 21b or the west side heat exchange surface 22b and the east side heat exchange surface 21b or the west side heat exchange surface 22b receives heat, the heat exchange surface on which the sunlight is incident can be cooled to prevent heat from being conducted to the frame 1a around that heat exchange surface and the electronic device 2.

In addition, in the structure illustrated in FIGS. 28 and 29, by dividing part of the electronic device 2 into the east side electronic device 2a and the west side electronic device 2b, the structure having unnecessary space can be suppressed by preventing the flow path of the cooler 4 from being routed back and forth in the east-west direction.

### Embodiment 7.

In Embodiment 7, the case in which the cooling device 100 is mounted in a mounting device other than the artificial satellite 200 will be described.

In Embodiments 1, 4, and 5, the cases in which the cooling device 100 is mounted in the artificial satellite 200 have been described. However, the cooling device 100 may be mounted in a mounting device other than the artificial satellite 200. However, the mounting device needs to have a plurality of heat exchange units other than the cooler 4 and some of the heat exchange units need to not only dissipate heat, but also receive heat.

For example, a ground facility needs to control the electronic device 2 to be cooled to a specific temperature close to room temperature, and the mounting device may have the heat exchange units other than the cooler 4 disposed indoors and outdoors. In this case, in the refrigerant flow path 10, the south surface heat exchange unit 51 and the north surface heat exchange unit 52 are replaced with the heat exchange unit disposed indoors that is air-conditioned and can always dissipate heat. In addition, the east surface heat exchange unit 21 or the west surface heat exchange unit 22 is replaced with the heat exchange unit disposed outdoors that changes heat reception and heat dissipation according to day or night or season.

Alternatively, for example, the mounting device may be an automobile. In this case, it is necessary to combine the heat exhaust to the outside air and the use for the cooling of the heat generators of an automobile such as the internal combustion engine of an engine car and the motor of an electric car and temperature adjustment of the vehicle interior. In this case, the cooling of the heat generators and the temperature adjustment of the vehicle interior can be performed evenly by using changes in the environment inside and outside the automobile.

The structures indicated in Embodiments 2 and 3 are directly applicable to ground device other than the artificial satellite 200 as is. The structures indicated in Embodiments 2 and 3 cause the gas-liquid two-phase flow to flow into the cooler 4 even when there is no gravity and achieve even cooling. However, normal operation is ensured even when gravity is present. Accordingly, this structure can operate normally even in moving devices that receive inertial forces other than gravity, such as an automobile, aircraft, a rail vehicle, and an elevator, so the structure is applicable.

### List of Reference Signs

- 1: main body
- 1a: frame
- 2: electronic device
- 2a: east side electronic device
- 2b: west side electronic device
- 3:: pump
- 4: cooler
- 4a: upstream space
- 4b: downstream space
- 4c: bypass flow path
- 4d: partition wall
- 4f: east side cooler
- 4g: west side cooler
- 4e: second cooler
- 5: heat exchanger
- 51: south surface heat exchange unit
- 51a: south surface heat exchanger
- 51b: south side heat dissipation surface
- 52: north surface heat exchange unit
- 52a: north surface heat exchanger
- 52b: north side heat dissipation surface
- 6: four-way valve
- 61: three-way valve
- 8: accumulator
- 10: refrigerant flow path
- 11: solar panel
- 20: vapor mixing unit
- 21: east surface heat exchange unit
- 21a:: east surface heat exchanger
- 21b: east side heat exchange surface
- 21c: first wick
- 21d: space
- 21e: space
- 21f: east side heat pipe
- 22:: west surface heat exchange unit
- 22a: west surface heat exchanger
- 22b: west side heat exchange surface
- 22c: second wick
- 22d:: space
- 22e: space
- 22f: west side heat pipe
- 23: ejector
- 23a: vena contracta
- 231: east side ejector
- 231a: vena contracta
- 232: west side ejector
- 232a: vena contracta
- 23b: confluence portion
- 23c: expanding portion
- 24: branch portion
- 25: gas-liquid separator
- 26: front heat exchanger
- 27: heat pipe
- 271: second refrigerant flow path;
- 28: secondary flow path
- 29: evaporator
- 29a: wick
- 30: east side check valve
- 31: west side check valve
- 32: rear heat exchanger
- 40a: first branch flow path
- 40b: second branch flow path
- 41, 41a: first point
- 42, 42a: second point
- 43a: fifth point
- 41b: third point
- 42b: fourth point
- 43b: sixth point
- 44: branch flow path
- 45: branch flow path
- 46: connection flow path;
- 47: branch flow path
- 48: tributary
- 49: tributary
- 100: cooling device
- 200: artificial satellite

## Claims

1. A cooling device to cool a heat generator mounted in a mounting device, the cooling device comprising:
- a refrigerant flow path configured annularly by sequentially connecting a pump to circulate a liquid refrigerant, a cooler to cool a heat generator with the refrigerant, and a heat exchanger to cool the refrigerant; and
- a vapor mixing unit to mix vapor generated by heat of at least one of heat intrusion from an outside to the mounting device and heat generation of the heat generator into the refrigerant flowing into the cooler in the refrigerant flow path.

2. The cooling device according to claim 1,
wherein the vapor mixing unit has a second heat exchanger to heat, with the heat, the refrigerant flowing into the cooler in the refrigerant flow path.

3. The cooling device according to claim 2,
wherein the second heat exchanger has two heat exchange units in which when one of the two heat exchange units undergoes heat intrusion from an outside, the other of the two heat exchange units does not undergo heat intrusion from an outside, and
the vapor mixing unit heats the refrigerant flowing into the cooler by the one of the two heat exchange units that undergoes heat intrusion, of the two heat exchange units of the second heat exchanger, and cools the refrigerant flowing out of the cooler by the other of the two heat exchange units that does not undergo heat intrusion.

4. The cooling device according to claim 3,
wherein the mounting device is an artificial satellite, and
the two heat exchange units are provided on two external wall surfaces of a main body of the artificial satellite, the two external wall surfaces facing opposite to each other.

5. The cooling device according to any one of claims 1 to 4,
wherein the vapor mixing unit has an ejector to merge part of the refrigerant after cooling the heat generator by the cooler with the refrigerant flowing into the cooler in the refrigerant flow path.

6. The cooling device according to claim 5, comprising:
a second cooler to further cool the heat generator with the part of the refrigerant after cooling the heat generator by the cooler,
wherein the ejector merges the refrigerant after cooling the heat generator by the second cooler with the refrigerant flowing into the cooler in the refrigerant flow path.

7. The cooling device according to claim 5, further comprising:
a gas-liquid separator to separate the refrigerant after cooling the heat generator by the cooler into a gas refrigerant and a liquid refrigerant,
wherein the ejector merges the gas refrigerant separated by the gas-liquid separator with the refrigerant flowing into the cooler in the refrigerant flow path.

8. The cooling device according to any one of claims 1 to 4,
wherein the cooler includes an upstream space into which the refrigerant flows from the refrigerant flow path, a downstream space into which the refrigerant having flowed through the upstream space flows so that the refrigerant cools the heat generator, and a bypass flow path through which part of the refrigerant having cooled the heat generator in the downstream space is returned to the upstream space.

9. The cooling device according to any one of claims 1 to 4,
wherein the vapor mixing unit includes a front heat exchanger to heat the refrigerant flowing into the cooler in the refrigerant flow path and a heat pipe to transport the heat due to the heat generation of the heat generator to the front heat exchanger.

10. The cooling device according to any one of claims 1 to 4,
wherein the vapor mixing unit includes a secondary flow path formed annularly by sequentially connecting a front heat exchanger to heat the refrigerant flowing into the cooler in the refrigerant flow path and an evaporator having a wick to circulate a secondary refrigerant by a capillary force generated at a gas-liquid interface formed when the secondary refrigerant evaporates because the secondary refrigerant is heated by the heat due to the heat generation of the heat generator.

11. The cooling device according to claim 2,
wherein the second heat exchanger has two heat exchange units in which when one of the two heat exchange units undergoes heat intrusion from an outside, the other of the two heat exchange units does not undergo heat intrusion from an outside,
the one of the two heat exchange units has a first wick that is connected to a first branch flow path that is branched from a first point between the pump and the cooler in the refrigerant flow path and merges with a second point between the pump and the cooler in the refrigerant flow path, and circulates the refrigerant flowing into the first branch flow path toward the second point due to a capillary force generated at a gas-liquid interface formed when the refrigerant evaporates due to heating by the heat of the heat intrusion, and
the other of the two heat exchange units has a second wick that is connected to a second branch flow path that is branched from a third point between the pump and the cooler in the refrigerant flow path and merges with a fourth point between the pump and the cooler in the refrigerant flow path, and circulates the refrigerant flowing into the second branch flow path toward the fourth point due to a capillary force at a gas-liquid interface formed when the refrigerant evaporates due to heating by the heat of the heat intrusion.

12. The cooling device according to claim 11,
wherein a check valve is provided between the heat exchange unit and the second point in the first branch flow path, the check valve being closed during generation of a flow from the second point to the one of the two heat exchange units, and
a check valve is provided between the heat exchange unit and the fourth point in the second branch flow path, the check valve being closed during generation of a flow from the fourth point to the other of the two heat exchange units.

13. The cooling device according to claim 2,
wherein the second heat exchanger has two heat exchange units in which when one of the two heat exchange units undergoes heat intrusion from an outside, the other of the two heat exchange units does not undergo heat intrusion from an outside,
the two heat exchange units are sequentially connected to a connection flow path that connects an intermediate portion of one of two branch flow paths to an intermediate portion of the other of the two branch flow paths, the two branch flow paths being branched at a first point between the pump and the cooler in the refrigerant flow path and merging with each other at a second point between the pump and the cooler in the refrigerant flow path, and each of the two heat exchange units has a wick to circulate the refrigerant flowing into the connection flow path oppositely to another heat exchange unit due to a capillary force generated at a gas-liquid interface formed when the refrigerant evaporates due to heating by the heat of the heat intrusion.

14. The cooling device according to claim 13,
wherein a rear heat exchanger to cool the refrigerant flowing out of the cooler with the refrigerant flowing through the connection flow path is connected between the two heat exchange units in the connection flow path.

15. The cooling device according to claim 2,
wherein the second heat exchanger has two heat exchange units in which when one of the two heat exchange units undergoes heat intrusion from an outside, the other of the two heat exchange units does not undergo heat intrusion from an outside,
the vapor mixing unit includes a secondary flow path formed annularly by sequentially connecting a front heat exchanger to heat the refrigerant flowing into the cooler in the refrigerant flow path and the two heat exchange units, and each of the two heat exchange units has a wick to circulate secondary refrigerant oppositely to another heat exchange unit due to a capillary force generated at a gas-liquid interface formed when the secondary refrigerant packed in the secondary flow path evaporates due to heating by the heat of the heat intrusion.

16. The cooling device according to claim 15,
wherein a rear heat exchanger to cool the refrigerant flowing out of the cooler with the secondary refrigerant flowing through the secondary flow path is connected between the two heat exchange units in the secondary flow path.

17. The cooling device according to claim 2,
wherein the second heat exchanger has two heat exchange units in which when one of the two heat exchange units undergoes heat intrusion from an outside, the other of the two heat exchange units does not undergo heat intrusion from an outside, and
the vapor mixing unit includes a front heat exchanger to heat the refrigerant flowing into the cooler in the refrigerant flow path and a heat pipe to connect the second heat exchanger to the front heat exchanger.

18. An artificial satellite comprising:
the cooling device according to any one of claims 1 to 17,
wherein the heat exchanger is provided on an external wall surface of a main body.
